(19) Europäisches Patentamt
European Patent Office
Office européen des brevets

(11) **EP 3 234 515 B1**

(12) **EUROPÄISCHE PATENTSCHRIFT**

(45) Veröffentlichungstag und Bekanntmachung des Hinweises auf die Patenterteilung:
**02.02.2022 Patentblatt 2022/05**

(21) Anmeldenummer: **15804838.9**

(22) Anmeldetag: **07.12.2015**

(51) Internationale Patentklassifikation (IPC):
**G01F 1/684** (2006.01)    **G01F 25/00** (2022.01)
**G01F 1/692** (2006.01)    **G01F 1/696** (2006.01)

(52) Gemeinsame Patentklassifikation (CPC):
**G01F 1/6965; G01F 1/6842; G01F 1/692; G01F 25/0007**

(86) Internationale Anmeldenummer:
**PCT/EP2015/078806**

(87) Internationale Veröffentlichungsnummer:
**WO 2016/096498 (23.06.2016 Gazette 2016/25)**

(54) **THERMISCHES DURCHFLUSSMESSGERÄT MIT DIAGNOSEFUNKTION**

THERMAL FLOWMETER WITH A DIAGNOSTIC FUNCTION

APPAREIL DE MESURE DE DÉBIT THERMIQUE AVEC FONCTION DE DIAGNOSTIC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2014 DE 102014119223**

(43) Veröffentlichungstag der Anmeldung:
**25.10.2017 Patentblatt 2017/43**

(73) Patentinhaber: **Endress+Hauser Flowtec AG**
**4153 Reinach (CH)**

(72) Erfinder:
• **ARNOLD, Martin**
  **4153 Reinach (CH)**

• **PFAU, Axel**
  **79664 Wehr (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
DE-A1-102004 058 553    DE-A1-102005 057 689
DE-A1-102009 045 956    GB-A- 2 140 923
US-A1- 2011 098 944

**Beschreibung**

Die Erfindung betrifft ein thermisches Durchflussmessgerät, insbesondere ein thermisches Durchflussmessgerät zur Bestimmung und/oder Überwachung des Massedurchflusses und/oder der Durchflussgeschwindigkeit eines strömungsfähigen Mediums durch eine Rohrleitung mit zumindest drei Sensorelementen und einer Elektronikeinheit, sowie ein Verfahren zum Betreiben eines solchen Durchflussmessgeräts. Ferner kann eine Aussage über den Zustand von zumindest einem der zumindest drei Sensorelemente getroffen werden. Das Durchflussmessgerät weist also eine Diagnosefunktion auf.

Thermische Durchflussmessgeräte finden vielfach Anwendung im Bereich der Prozessmesstechnik. Entsprechende Feldgeräte werden von der Anmelderin beispielsweise unter der Bezeichnung t-switch, t-trend oder t-mass hergestellt und vertrieben. Die zugrundeliegenden Messprinzipien sind entsprechend aus einer Vielzahl von Veröffentlichungen bekannt.

Typischerweise umfasst ein gattungsgemäßes Durchflussmessgerät zumindest zwei Sensorelemente, wovon jedes einen möglichst gleichartig ausgestalteten Temperatursensor aufweist, und zumindest eines der Sensorelemente beheizbar ausgestaltet ist. Dazu kann innerhalb des jeweiligen Sensorelements entweder eine zusätzliche Widerstandsheizung integriert werden. Alternativ kann aber der Temperatursensor auch selbst als Widerstandselement, z. B. in Form eines RTD- Widerstandselements (Resistance Temperature Detector), insbesondere in Form eines Platinelements, wie es unter den Bezeichnungen PT10, PT100, und PT1000 auch kommerziell erhältlich ist, ausgebildet sein. Das Widerstandselement, auch als Widerstandsthermometer bezeichnet, wird dann über die Umsetzung einer ihm zugeführten elektrischen Leistung, z. B. in Folge einer erhöhten Stromzufuhr, erwärmt.

Oftmals ist der Temperatursensor innerhalb einer zylindrischen Hülse, insbesondere einer Hülse aus einem Metall, insbesondere aus Edelstahl oder Hastelloy, angeordnet. Die Hülse hat dann die Funktion eines Gehäuses, welches den Temperatursensor beispielsweise vor aggressiven Medien schützt. Bei dem jeweils zumindest einen beheizbaren Temperatursensor muss zudem gewährleistet sein, dass zwischen dem beheizbaren Temperatursensor und der Hülse ein möglichst guter thermischer Kontakt besteht.

Zur Erfassung des Massedurchflusses und/oder der Strömungsgeschwindigkeit werden die zumindest zwei Sensorelemente in eine von einem strömungsfähigen Medium zumindest zeitweise und teilweise durchströmte Rohrleitung eingebracht, derart, dass sie mit dem Medium in thermischem Kontakt stehen. Sie können dazu entweder direkt in die Rohrleitung eingebracht werden, oder in ein Messrohr integriert werden, welches in eine bestehende Rohrleitung einbaubar ist. Beide Möglichkeiten sind Gegenstand der vorliegenden Erfindung, auch wenn im Folgenden stets nur von einer Rohrleitung die Rede sein wird.

Im Betrieb wird zumindest einer der zumindest zwei Temperatursensoren beheizt (aktiver Temperatursensor) während der zweite Temperatursensor unbeheizt bleibt (passiver Temperatursensor). Der passive Temperatursensor wird zur Erfassung der Temperatur des strömungsfähigen Mediums eingesetzt. Unter der Mediumstemperatur sei dabei jene Temperatur verstanden, welche das Medium ohne einen zusätzlichen Wärmeeintrag einer Heizeinheit aufweist. Das aktive Sensorelement wird üblicherweise entweder so beheizt, dass sich eine feste Temperaturdifferenz zwischen den beiden Temperatursensoren einstellt, wobei die Änderung der Heizleistung als Maß für den Massedurchfluss und/oder die Durchflussgeschwindigkeit herangezogen wird. Alternativ kann aber auch die eingespeiste Heizleistung zeitlich konstant gehalten werden, so dass die entsprechende Temperaturänderung zur Bestimmung des Massedurchflusses und/oder der Durchflussgeschwindigkeit heranzuziehen ist.

Ist in der Rohrleitung keine Strömung vorhanden, erfolgt die Ableitung der Wärme von dem aktiven Temperatursensor über Wärmeleitung, Wärmestrahlung und ggf. auch über freie Konvektion innerhalb des Mediums. Zur Aufrechterhaltung einer bestimmten Temperaturdifferenz wird dann beispielsweise eine zeitlich konstante Wärmemenge benötigt. Beim Vorliegen einer Strömung hingegen kommt es zu einer zusätzlichen Abkühlung des aktiven Temperatursensors durch das vorbeiströmende kältere Medium. Es tritt ein zusätzlicher Wärmetransport aufgrund von erzwungener Konvektion auf. Entsprechend muss also in Folge einer Strömung entweder eine erhöhte Heizleistung eingespeist werden, um eine feste Temperaturdifferenz aufrecht erhalten zu können, oder aber die Temperaturdifferenz zwischen dem aktiven und passiven Temperatursensor verringert sich.

Dieser funktionale Zusammenhang zwischen der dem aktiven Temperatursensor zugeführten Heizleistung bzw. der Temperaturdifferenz und dem Massedurchfluss und/oder der Durchflussgeschwindigkeit des Mediums durch die Rohrleitung kann mittels des sogenannten Wärmeübertragungskoeffizienten ausgedrückt werden. Die Abhängigkeit des Wärmeübertragungskoeffizienten vom Massedurchfluss des Mediums durch die Rohrleitung wird dann zu dessen Bestimmung und/oder der Bestimmung der Durchflussgeschwindigkeit ausgenutzt. Daneben haben die thermophysikalischen Eigenschaften des Mediums sowie der in der Rohrleitung herrschende Druck einen Einfluss auf den gemessenen Durchfluss. Um auch der Abhängigkeit des Durchflusses von diesen Größen Rechnung zu tragen, sind beispielsweise die thermophysikalischen Eigenschaften in Form von Kennlinien oder als Bestandteile funktionaler Bestimmungsgleichungen innerhalb einer Elektronikeinheit des Durchflussmessgeräts hinterlegt.

Mittels eines thermischen Durchflussmessgeräts lässt sich nicht ohne weiteres zwischen einer vorwärts gerichteten und einer rückwärtsgerichteten Strömung unterscheiden. Dabei sei unter der Strömungsrichtung hier die makroskopische Strömungsrichtung verstanden, für welche partiell auftretende Wirbel oder Richtungsabweichungen nicht in Betracht gezogen werden. Ist die Strömungsrichtung nicht bekannt, so kann es insbesondere bei einer zeitlich nicht konstanten oder auch sehr niedrigen Strömung jedoch nachteilig zu erheblichen Messfehlern bei der Bestimmung des Massedurchflusses und/oder der Durchflussgeschwindigkeit kommen.

Somit sind verschiedene thermische Durchflussmessgeräte entwickelt und offenbart worden, welche neben der Bestimmung des Massedurchflusses und/oder der Durchflussgeschwindigkeit eine Zusatzfunktionalität zur Strömungsrichtungserkennung aufweisen. Zur Ermittlung der Strömungsrichtung wird häufig ausgenutzt, dass unterschiedliche lokale Strömungen, welche das jeweilige Sensorelement unmittelbar umgeben, zu unterschiedlichen Abkühlraten des jeweiligen Sensorelements bei jeweils gleicher zugeführter Heizleistung führen. Unterschiedliche lokale Strömungen lassen sich beispielsweise durch die Integration eines Staukörpers in die Rohrleitung in unmittelbarer Umgebung von zumindest einem der zumindest zwei Sensorelemente durch eine in Bezug auf das Strömungsprofil nicht äquivalente Anordnung der zumindest zwei Sensorelemente, oder auch durch unterschiedliche geometrische Ausgestaltungen der zumindest zwei Sensorelemente realisieren.

Bei dem Durchflussmessgerät gemäß der DE102010040285A1 ist beispielsweise eine Platte innerhalb eines Messrohres auf einer Verbindungslinie zwischen einem ersten und einem zweiten beheizbaren Temperatursensor angeordnet. Anhand des Vergleichs der sogenannten Entscheidungskoeffizienten, welche sich aus den jeweiligen Heizleistungen und Temperaturen der zumindest zwei beheizbaren Temperatursensoren ergeben, wird dann die Strömungsrichtung des Mediums ermittelt. Diese Entscheidungskoeffizienten werden ebenfalls in den Patentveröffentlichungen DE102009045956A1 und DE102009045958A1 zur Bestimmung der Strömungsrichtung herangezogen. Dabei weist das Durchflussmessgerät gemäß der DE102009045956A1 einen strömungsführenden Körper auf, welcher gemeinsam mit einem beheizbaren Temperatursensor in einer Linie im Wesentlichen parallel zur Rohrleitungsachse angeordnet ist, und wobei ein weiterer Temperatursensor davon beabstanded angeordnet ist. Dagegen sind bei dem Durchflussmessgerät aus der DE102009045958A1 zumindest zwei beheizbare Temperatursensoren in zwei Hülsenabschnitten angeordnet, wobei die zumindest zwei Hülsenabschnitte in zumindest zwei Richtungen bezogen auf die Messrohrachse zeigen.

In der DE102007023840B4 wird ein thermisches Durchflussmessgerät mit Strömungsrichtungserkennung beschrieben, welches zumindest drei Sensorelemente umfasst, wovon zwei Sensorelemente in Strömungsrichtung aufeinanderfolgend angeordnet sind und wobei zumindest eines dieser zwei Sensorelemente beheizt ist, und zumindest zeitweise in Bezug auf die Strömungsrichtung das beheizte vor dem nicht beheizten Sensorelement angeordnet ist, und zeitweise das nicht beheizte vor dem beheizten Sensorelement angeordnet ist. Das dritte Sensorelement ist ferner periodisch kurzzeitig beheizbar und außerhalb der Strömung über die ersten beiden Sensorelementen angeordnet. Die Abweichung der jeweils gewonnenen Messwerte ist dann ein Maß für die Strömungsrichtung des Mediums.

Weitere Ursachen für eine gegebenenfalls erhebliche Messwertverfälschung bestehen beispielsweise in einer Änderung des thermischen Widerstands von zumindest einem der verwendeten Sensorelemente, welche zu einem Wechsel des Wärmeübergangs von der Heizeinheit in das Medium bei ansonsten gleich bleibenden Strömungsbedingungen führen kann. Eine solche Änderung des thermischen Widerstands wird auch als Sensordrift bezeichnet. Unter Umständen, wenn die Änderung des effektiven thermischen Widerstandes unter einem bestimmten vorgebbaren Grenzwert verbleibt, und falls die Änderung erkannt wird, kann die Sensordrift sowie der negativer Einfluss auf die Bestimmung des Massedurchflusses und/oder der Durchflussgeschwindigkeit durch geeignete Gegenmaßnahmen zumindest teilweise behoben werden. Ansonsten muss ggf. das Durchflussmessgerät zumindest teilweise ausgetauscht werden.

Grundsätzlich werden in Bezug auf den thermischen Widerstand ein innerer und ein äußerer thermischer Widerstand unterschieden. Der innere thermische Widerstand hängt u.a. von einzelnen Bauteilen innerhalb des Sensorelements, z.B. innerhalb der Hülsen, ab. So kann eine Sensordrift durch Fehlstellen bei Lötanbindungen aufgrund von Zugbelastungen durch Materialausdehnung oder dergleichen zustande kommen. Der äußere thermische Widerstand wird dagegen durch Belagsbildung, Materialabtrag oder Materialumwandlung (z.B. Korrosion) an den das Medium berührenden Flächen des jeweiligen Sensorelements beeinflusst. Eine Änderung des äußeren thermischen Widerstands ist somit insbesondere im Langzeitbetrieb und/oder bei Kontakt mit aggressiven Medien relevant. Im Falle von gasoder dampfförmigen Medien kann die Messung des Massedurchflusses oder der Durchflussgeschwindigkeit darüber hinaus auch durch Kondensatsbildung an zumindest einem der Temperatursensoren beeinträchtigt werden.

Aus dem Stand der Technik sind mehrere Durchflussmessgeräte bekannt geworden, mittels welcher sich eine Diagnose über zumindest eines der jeweils verwendeten Sensorelemente tätigen lässt. Es lässt sich also eine Aussage über den Zustand von zumindest einem der jeweils verwendeten Sensorelemente treffen.

Die DE102005057687A1 beschreibt ein thermisches Durchflussmessgerät mit zumindest zwei beheizbar ausgestalteten Temperatursensoren, wobei der erste Temperatursensor und der zweite Temperatursensor alternierend als passiver, nicht beheizter Temperatursensor, der während eines ersten Messintervalls Information über die aktuelle Temperatur des Mediums bereitstellt, und als aktiver beheizter Temperatursensor, der während eine zweiten Messintervalls Information über den Massedurchfluss des Mediums durch die Rohrleitung bereitstellt, ansteuerbar. Eine Regel-/Auswerteeinheit gibt eine Meldung aus und/oder nimmt eine Korrektur vor, sobald die während des ersten Messintervalls und des zweiten Messintervalls bereitgestellten korrespondierenden Messwerte der beiden Temperatursensoren voneinander abweichen. Auf diese Weise können Belagsablagerungen und Kondensatsbildung erkannt werden.

Ähnlich ist in der DE102007023823A1 ist ein thermisches Durchflussmessgerät mit zwei phasenweise abwechselnd oder alternierend beheizbaren Sensorelementen sowie ein Verfahren zu dessen Betrieb offenbart. Der Massedurchfluss wird dann abwechselnd anhand des jeweils beheizten Sensorelements ermittelt, wobei das jeweils nicht beheizte Sensorelement zur Ermittlung der Mediumstemperatur herangezogen wird. Aus einem Vergleich der mit den beiden Sensorelementen gewonnen Messwerte kann zusätzlich eine Verschmutzung zumindest eines der beiden Sensorelemente erkannt werden.

In der US8590360B2 ist beschrieben, ein erstes beheizbares Sensorelement mit einer ersten Heizleistung zu heizen oder kühlen, und gleichzeitig ein zweites beheizbares Sensorelement mit einer zweiten Heizleistung zu heizen oder zu kühlen. Typischerweise werden die beiden Heizleistungen so gewählt, dass sich die Temperaturen der beiden Sensorelemente unterscheiden. Durch einen Vergleich der Mediumstemperatur, und/oder von zumindest zwei unabhängigen die Wärmeübergangskoeffizienten charakterisierenden Größen kann dann eine Diagnose über das Durchflussmessgerät gefällt werden.

Schließlich ist aus der WO/2008/142075A1 ein Verfahren bekannt geworden, bei welchem beheizbarer mit einem Medium in thermischen Kontakt stehender Temperatursensor mit einem alternierenden Strom- oder Spannungssignal geheizt wird und die erzeugte Wärme zumindest teilweise an das strömende Medium abgibt. Der Verlauf eines innerhalb des Temperatursensors stattfindenden Heiz- und/oder Abkühlvorgangs wird gemessen und daraus der Zustand des Temperatursensors, insbesondere eine Verschmutzung und/oder eine Beschichtung diagnostiziert. Gleichzeitig kann der Massedurchfluss bestimmt werden.

Im Prinzip wird mit den beschriebenen Durchflussmessgeräten mit einer Diagnosefunktion eine Änderung des thermischen Widerstands detektiert. Daraus wird dann auf eine Belags-und/oder Kondensatsbildung geschlossen. Dies entspricht einer Änderung des äußeren thermischen Widerstands. Wie eingangs beschrieben, kann eine Sensordrift jedoch auch durch eine Änderung des inneren thermischen Widerstands hervorgerufen werden. Der innere thermische Widerstand wird durch den Aufbau und die verwendeten Materialien innerhalb des jeweiligen Sensorelements bestimmt, insbesondere durch die verschiedenen Bauteile z.B. innerhalb der Hülsen bzw. Gehäuse, oder durch verschiedene Materialverbindungen und/oder-übergänge, wie z. B. Lötverbindungen. Es wäre also wünschenswert, eine Diagnosefunktion zur Verfügung zu haben, mittels welcher im Falle eine Sensordrift an zumindest einem der zumindest drei Sensorelemente zwischen einer Änderung des äußeren und inneren thermischen Widerstands unterschieden werden könnte.

Die meisten der genannten Durchflussmessgeräte, welche sich zur Diagnose einer Belags-und/oder Kondensatsbildung oder zur Aussage über den Zustand zumindest einen Sensorelements eignen, sind jedoch nicht in der Lage, gleichzeitig den Durchfluss und die Diagnose, oder gleichzeitig den Durchfluss und die Strömungsrichtung, oder beides, zu ermitteln. Bei den jeweils angewendeten Messprinzipien werden die einzelnen Sensorelemente zeitweise beheizt, und dienen zeitweise der Erfassung der Mediumstemperatur. Entsprechend muss bei jedem Wechsel der Temperatur für eines der Sensorelemente bis zur nächsten Messwerterfassung so lange gewartet werden, bis sich die neue Temperatur jeweils stabil eingestellt hat. Somit können beispielsweise der Massedurchfluss und/oder die Durchflussgeschwindigkeit nicht kontinuierlich bestimmt werden. Entsprechend setzen die jeweils angewendeten Verfahren zumindest über den Zeitraum, welcher jeweils bis zur stabilen Einstellung einer neuen Temperatur von zumindest einem Sensorelemente benötigt wird, eine nahezu konstante Durchflussrate des Mediums durch die Rohrleitung voraus. Jedoch ist es in der Praxis häufig so, dass die Durchflussraten mit der Zeit zumindest geringfügig variieren, was dann zu einem verfälschten Messergebnis führen kann. Dies ist insbesondere bei hohen Durchflussraten problematisch.

Ausgehend vom genannten Stand der Technik liegt der vorliegenden Erfindung die Aufgabe zugrunde, ein thermisches Durchflussmessgerät sowie ein Verfahren zum Betreiben eines entsprechenden Durchflussmessgeräts bereitzustellen, mittels welchem der Massedurchfluss und/oder die Durchflussgeschwindigkeit möglichst genau bestimmt und eine gegebenenfalls auftretende Sensordrift möglichst genau lokalisiert werden können. Bezüglich der Vorrichtung wird diese Aufgabe gelöst durch ein Thermisches Durchflussmessgerät, zur Bestimmung und/oder Überwachung des Massedurchflusses $\Phi_M$ und/oder der Durchflussgeschwindigkeit $v_D$ eines strömungsfähigen Mediums durch eine Rohrleitung

mit zumindest drei Sensorelementen und einer Elektronikeinheit,

wobei jedes der zumindest drei Sensorelemente

- zumindest teilweise und/oder zeitweise mit dem Medium in thermischem Kontakt steht, und
- einen beheizbaren Temperatursensor umfasst, und

wobei die Elektronikeinheit dazu ausgestaltet ist,

- jedes der drei Sensorelemente mit einer Heizleistung zu heizen,
- dessen Temperatur zu erfassen,
- zumindest zwei der zumindest drei Sensorelemente gleichzeitig zu heizen, wobei zumindest eines der drei Sensorelemente unbeheizt bleibt und zur Erfassung der Temperatur des Mediums dient,
- kontinuierlich den Massedurchfluss $\Phi_M$ und/oder die Durchflussgeschwindigkeit $v_D$ des Mediums zu ermitteln, und gleichzeitig
- aus einem paarweisen Vergleich der Temperaturen und/oder Heizleistungen der zumindest drei Sensorelemente und/oder zumindest einer aus zumindest einer der Temperaturen und/oder Heizleistungen abgeleiteten Größe eine Aussage über eine Änderung des thermischen Widerstands von zumindest einem der zumindest drei Sensorelemente zu treffen,
- aus einer Sprungantwort auf eine sprunghafte Änderung der zugeführten Heizleistung $\Delta P$ an zumindest einem der zumindest drei Sensorelemente eine Aussage über eine Änderung des inneren thermischen Widerstands des zumindest einen Sensorelements zu treffen, und
- im Falle dass eine Änderung des inneren und/oder äußeren thermischen Widerstands an zumindest einem der zumindest drei Sensorelemente auftritt, eine Korrektur des Messwerts für den Massedurchflusses $\Phi_M$ und/oder der Durchflussgeschwindigkeit $v_D$ durchzuführen und/oder eine Meldung über den Zustand des zumindest einen Sensorelements zu generieren und auszugeben.

Die zugeführte Heizleistung kann dabei entweder konstant sein, also einem festen Wert entsprechen, oder aber einstellbar, derart, dass im laufenden Betrieb die zugeführte Heizleistung geändert, gesteuert und/oder geregelt werden kann.

Die Elektronikeinheit muss dann in der Lage sein, jedes der drei Sensorelemente unabhängig voneinander, sowie zumindest zwei gleichzeitig, zu beheizen. Zumindest eines der Sensorelemente bleibt ferner unbeheizt und dient der Erfassung der Mediumstemperatur. Im Falle, dass zur Bestimmung des Massedurchfluss und/oder der Durchflussgeschwindigkeit eine konstante Temperaturdifferenz zwischen zumindest einem beheizten Sensorelement und demjenigen, welches die Mediumstemperatur anzeigt, eingestellt wird, sollte die Elektronikeinheit zumindest zwei Regeleinheiten zur Regelung der jedem der jeweils beheizten Sensorelemente zugeführten Heizleistung aufweisen. So kann beispielsweise eines der zumindest zwei beheizten Sensorelemente zur Ermittlung des Massedurchflusses und/oder der Durchflussgeschwindigkeit und das andere zur Diagnose eingesetzt werden. Vorteilhaft ist für jedes der beheizten Sensorelemente eine separate Regeleinheit vorhanden, damit im laufenden Betrieb jede mögliche Kombination jeweils beheizter und nicht beheizter Sensorelemente auswählbar ist. Wird der Massedurchfluss und/oder die Durchflussgeschwindigkeit jedoch aus der Temperaturdifferenz, welche sich bei Zuführung einer konstanten Heizleistung zwischen einem beheizten und einem unbeheizten Sensorelement ergibt, so sollte jedem der drei Sensorelemente individuell eine bestimmbare jedoch konstante Heizleistung zugeführt werden können. Es können dann sowohl die Temperaturdifferenzen zwischen jeweils einem der beheizten Sensorelemente und jenem welches die Mediumstemperatur erfasst, verglichen werden, als auch die Temperaturdifferenzen zwischen zwei auf unterschiedliche Temperaturen geheizten Sensorelementen.

Dadurch, dass jedes der zumindest drei Sensorelemente einzeln beheizbar ist, und dadurch, dass jeweils zumindest zwei der zumindest drei Sensorelemente gleichzeitig beheizbar sind, können der Massedurchfluss und/oder die Durchflussgeschwindigkeit kontinuierlich und sehr genau bestimmt werden. Gleichzeitig ist eine Diagnose, also eine Aussage über den Zustand von zumindest einem der zumindest drei Sensorelemente möglich. Ein weiterer Vorteil in Bezug auf ein erfindungsgemäßes Durchflussmessgerät liegt darin, dass nicht nur eine Aussage darüber möglich ist, dass zumindest eines der zumindest drei Sensorelemente eine Sensordrift zeigt, sondern falls möglich auch darüber, welches der zumindest drei Sensorelemente betroffen ist. Dann kann im Falle von Sensordrift an einem der Sensorelemente der Durchfluss immer noch genau bestimmt werden kann. Wird nämlich beispielsweise für ein erstes Sensorelement eine Sensordrift detektiert, kann unterbrechungslos auf ein zweites Sensorelement zur Bestimmung des Massedurchfluss und/oder Durchflussgeschwindigkeit umgeschaltet werden.

Vorteilhaft lässt sich ferner aus der Sprungantwort, eine Änderung des inneren thermischen Widerstands des zumindest einen Sensorelements feststellen. Dies ermöglicht Rückschlüsse über die Funktionsfähigkeit eines Sensorelements, bzw. über den Zustand einzelner Bauteile z.B. innerhalb der Hülsen, oder auch über Lötverbindungen. Vorteilhaft, kann mit einem erfindungsgemäßen thermischen Durchflussmessgerät also zwischen einer Änderung des inneren und äußeren thermischen Widerstands unterschieden werden. Damit kann nicht nur das Sensorelement, für welches eine Sensordrift auftritt, identifiziert werden. Vielmehr kann auch die Ursache für die Sensordrift festgestellt werden.

Die Diagnosefunktion kann weiterhin vorteilhaft während des Betriebs des jeweiligen Durchflussmessgeräts durchgeführt werden. Das Messgerät muss dazu nicht extra ausgebaut werden. Auch kann während der Durchführung der Diagnosefunktion Medium durch die Rohrleitung strömen.

Die sprunghafte Änderung der zugeführten Heizleistung $\Delta P = P_1 - P_2$ kann dabei positiv oder negativ sein. Entsprechend kann die Sprungantwort des zumindest einen Sensorelements beispielsweise erfasst werden, wenn ein zuvor unbeheiztes Sensorelement ab einem bestimmten Zeitpunkt beheizt wird, oder auch umgekehrt, wenn die einem Sensorelement zugeführte Heizleistung abgeschaltet wird. Aber auch bei einer Änderung der jeweils zugeführten Heizleistung $\Delta P$ von einem ersten auf einen zweiten Wert kann die Sprungantwort aufgezeichnet werden. Wichtig ist, dass die Änderung der zugeführten Heizleistung $\Delta P$ abrupt erfolgt, und nicht kontinuierlich oder stufenlos geregelt wird. Eine erfindungsgemäße Elektronikeinheit muss entsprechend dazu ausgestaltet sein, eine Sprungantwort aufzuzeichnen, also über eine ausreichend hohe Abtastrate zur Erfassung der Messgröße, deren Sprungantwort aufgezeichnet und analysiert werden soll, aufweisen. Idealerweise, sollte die Abtastrate im Bereich von Millisekunden oder weniger liegen. Es handelt sich also um ein auf einfache Weise in einem Messgerät implementierbares Verfahren.

Dem Vorgehen, eine Analyse einer Sprungantwort des zumindest einen Sensorelements zu Diagnosezwecken durchzuführen, liegt folgender Sachverhalt zugrunde: Durch die sprunghafte Änderung der zugeführten Heizleistung $\Delta P$ ändert sich ebenfalls sprunghaft die von der Heizeinheit innerhalb des Sensorelements zu dessen Oberfläche transportierte Wärme, also die Wärmeausbreitung. Dieser Wärmetransport hängt ganz allgemein von unterschiedlichen Faktoren und verschiedenen physikalischen, chemischen und materialspezifischen Parametern, insbesondere den thermophysikalischen Stoffeigenschaften, wie beispielsweise von der Dichte p, der Wärmeleitfähigkeit $\lambda$, der spezifischen Wärmekapazität c oder auch der Wärmediffusivität $\alpha$ des jeweils verwendeten Materials bzw. der jeweils verwendeten Materialien ab. Aber auch die Geometrie des jeweiligen Bauteils sowie Materialübergänge spielen eine Rolle. In der Realität kommen jedoch noch weitere durch die Alterung des Sensorelements bedingte Effekte zum Tragen, welche den Wärmetransport beeinflussen, wie beispielsweise thermische und/oder mechanische Belastungen.

Bis zu jenem Zeitpunkt, an welchem die jeweils transportierte Wärme zur Oberfläche des Sensorelements gelangt ist, ist der Wärmetransport lediglich durch die genannten Größen definiert. Ab dem Moment, an welchem die transportierte Wärme die Oberfläche des Sensorelements erreicht, wird der Wärmetransport dagegen durch das an dem Sensorelement vorbeiströmenden Medium dominiert. Die Analyse der Sprungantwort gibt also, da sie sich auf die Zeitskala konzentriert, in welcher die transportierte Wärme noch nicht bis zur Oberfläche des Sensorelements gelangt ist, Aufschluss über eine Änderung des inneren thermischen Widerstands.

In einer besonders bevorzugten Ausführung ist die Elektronikeinheit dazu ausgestaltet, die Strömungsrichtung des strömungsfähigen Mediums zu bestimmen. Ein dieser Ausgestaltung entsprechendes Durchflussmessgerät bietet dann also neben der Zusatzfunktionalität, eine Diagnose stellen zu können, bzw. eine Aussage über den Zustand zumindest eines Sensorelements treffen zu können, auch eine Strömungsrichtungserkennung. Dies erhöht die erreichbare Messgenauigkeit noch weiter.

Eine weitere Ausgestaltung beinhaltet, dass die Elektronikeinheit dazu ausgestaltet ist, unterbrechungslos, also kontinuierlich, den Massedurchfluss und/oder die Durchflussgeschwindigkeit zu ermitteln, die Strömungsrichtung des Mediums zu bestimmen und/oder eine Aussage über den äußeren und/oder inneren thermischen Widerstand von zumindest einem der zumindest drei Sensorelemente zu treffen.

Es ist von Vorteil, wenn zumindest eines der zumindest drei Sensorelemente eine erste Ausgestaltung bezogen auf die Geometrie, Aufbau und Material, aufweist, und zumindest ein zweites der zumindest drei Sensorelemente eine zweite von der ersten verschiedene Ausgestaltung aufweist. Es ist von ferner von Vorteil, wenn zumindest zwei der zumindest drei Sensorelemente an in Bezug auf die es jeweils lokal umgebende Strömung des Mediums zwei ersten äquivalenten Positionen innerhalb der Rohrleitung angeordnet sind, und wobei zumindest eines der zumindest drei Sensorelemente an einer in Bezug auf die es lokal umgebende Strömung des Mediums zweiten von der ersten verschiedenen Position innerhalb der Rohrleitung angeordnet ist. Durch die unterschiedlichen geometrischen Ausgestaltungen und/oder Anordnungen der einzelnen Sensorelemente innerhalb der Rohrleitung ist auch jeweils die durch die Strömung des Mediums hervorgerufene Abkühlrate an jedem der Sensorelemente unterschiedlich. Dies wirkt sich insbesondere vorteilhaft in Bezug auf die Erkennung der Strömungsrichtung aus, aber auch auf die Diagnose über Sensordrift. Der Grund hierfür liegt darin, dass sich die Kennlinien bzw. die funktionalen Abhängigkeiten zwischen den Temperaturen, den zugeführten Heizleistungen, sowie den thermophysikalischen Eigenschaften und auch weiterer Parameter der einzelnen Sensorelemente für eine vorwärts und rückwärtsgerichtete Strömung unterscheiden.

In einer bevorzugten Ausgestaltung ist zumindest eines der zumindest drei Sensorelemente in Bezug auf die Längsachse durch die Rohrleitung in unmittelbarer Umgebung vor oder hinter einem Staukörper, oder einem anderen strömungsbeeinflussenden Modul, angeordnet. Dabei ist es von Vorteil, wenn die Querschnittsfläche des Staukörpers ein Dreieck, ein Rechteck, ein Parallelogramm, ein Trapez, ein Kreis oder ein Ellipse ist. Durch diese Maßnahme wird das lokale das jeweilige Sensorelement umgebende Strömungsprofil im Vergleich zu einem nicht hinter einem Staukörper angeordneten Sensorelement, oder im Vergleich zu einem hinter einem Staukörper unterschiedlicher Geometrie angeordneten Sensorelement, gezielt verändert. Der Effekt, welcher durch die Integration eines Staukörpers erreicht wird, ist dabei in der Regel größer als derjenige, welcher sich durch unterschiedliche geometrische Ausgestaltungen oder Anordnungen ergibt.

In einer bevorzugten Ausgestaltung umfasst das zumindest eine Sensorelement ein Gehäuse, insbesondere aus einem Metall, insbesondere Edelstahl oder Hastelloy, wobei im Inneren des Gehäuses zumindest der Temperatursensor, insbesondere ein RTD-Widerstandselement, angeordnet ist, derart, dass das Gehäuse und der Temperatursensor in thermischem Kontakt stehen. Das Gehäuse schützt das Sensorelement vor Beschädigungen. Insbesondere bei einem Einsatz in aggressiven Medien ist ein derartiger Schutz von großem Vorteil.

Gemäß einer besonders bevorzugten Ausgestaltung umfasst das thermische Durchflussmessgerät genau drei Sensorelemente, wobei zumindest eines der drei Sensorelemente in unmittelbarer Umgebung eines Staukörpers, oder eines anderen strömungsbeeinflussenden Moduls angeordnet ist. Dabei ist es von Vorteil, wenn das erste und das zweite Sensorelement symmetrisch auf gegenüberliegenden Seiten einer gedachten Achse parallel zur Rohrleitung angeordnet sind, wobei das dritte Sensorelement auf der gedachten Achse angeordnet ist, und wobei zwischen der gedachten Verbindungslinie durch das erste und das zweite Sensorelement und dem dritten Sensorelement ein Staukörper angeordnet ist, dessen Abstand zum dritten Sensorelement geringer ist als derjenige zu der gedachten Verbindungslinie.

Es ist von Vorteil, wenn die Elektronikeinheit eine Speichereinheit umfasst, auf welcher Speichereinheit zumindest eine Referenz für eine Reaktion des Sensorelements auf eine sprunghafte Änderung der zugeführten Leistung im funktionsfähigen Zustand gespeichert ist. Diese Referenzkurve kann zum Zeitpunkt der Fertigung oder Parametrierung des Durchflussmessgeräts aufgenommen werden. Die Analyse der Sprungantwort kann dann aus einem Vergleich einer gemessenen Kurve mit einer auf der Speichereinheit hinterlegten Referenzkurve vorgenommen werden, beispielsweise durch einen Vergleich der jeweiligen Funktionswerte zu bestimmten vorgebbaren charakteristischen Zeitpunkten.

Ferner ist es von Vorteil, wenn die Elektronikeinheit so ausgestaltet ist, dass sie in einem Zeitintervall von typischerweise weniger als 100ms zumindest 100 Messwerte aufnehmen kann. Diese Vorgabe für eine minimale Abtastrate der Messgröße, deren Sprungantwort analysiert wird, gewährleistet in jenem kurzen für die Erfassung der Sprungantwort zur Verfügung stehenden Zeitintervall eine ausreichende Anzahl an Messwerten.

Die erfindungsgemäße Aufgabe wird ferner gelöst durch ein Verfahren zum Betreiben eines thermischen Durchflussmessgeräts zur Bestimmung und/oder Überwachung des Massedurchflusses $\Phi_M$ und/oder der Durchflussgeschwindigkeit $v_D$ eines strömungsfähigen Mediums durch eine Rohrleitung mit zumindest drei Sensorelementen und einer Elektronikeinheit, insbesondere nach zumindest einem der vorhergehenden Ansprüche, in einem Normalbetriebsmodus und in einem Diagnosemodus,

wobei im Normalbetriebsmodus zumindest eines der zumindest drei Sensorelemente mit einer einstellbaren Heizleistung beheizt, und dessen Temperatur erfasst wird, und der Massedurchflusses $\Phi_M$ und/oder der Durchflussgeschwindigkeit $v_D$ des Mediums bestimmt wird, und

wobei im Diagnosemodus zumindest folgende Ablaufschritte durchgeführt werden:

- ein erstes Sensorelement wird mit einer ersten Heizleistung beheizt und dessen Temperatur erfasst,
- ein zweites Sensorelement wird mit einer zweiten Heizleistung beheizt und dessen Temperatur erfasst,
- die Temperatur des Mediums wird mittels eines nicht beheizten dritten Sensorelements erfasst,
- aus der Heizleistung und/oder Temperatur des ersten oder zweiten Sensorelements und/oder zumindest einer aus zumindest einer dieser Größen abgeleiteten Größe wird der Massedurchflusses $\Phi_M$ und/oder der Durchflussgeschwindigkeit $v_D$ des Mediums bestimmt,
- aus einem paarweisen Vergleich der Temperaturen und/oder Heizleistungen des ersten und/oder zweiten Sensorelements und der Temperatur des dritten Sensorelements und/oder aus zumindest einer aus den Temperaturen und/oder Heizleistungen abgeleiteten Größe wird eine Aussage über eine Änderung des thermischen Widerstands von zumindest einem der zumindest drei Sensorelemente getroffen,
- aus einer Sprungantwort auf eine sprunghafte Änderung der zugeführten Heizleistung ΔP an zumindest einem der zumindest drei Sensorelemente wird eine Aussage über eine Änderung des inneren thermischen Widerstands des zumindest einen Sensorelements getroffen, und
- es wird Korrektur des Messwerts für den Massedurchflusses $\Phi_M$ und/oder der Durchflussgeschwindigkeit $v_D$ durchgeführt und/oder eine Meldung über den Zustand von zumindest einem der zumindest drei Sensorelemente generiert und ausgegeben.

Auf diese Weise können Massedurchfluss und/oder die Durchflussgeschwindigkeit kontinuierlich und genau bestimmt werden. Gleichzeitig ist eine Diagnose, also eine Aussage über eine Änderung des äußeren und/oder inneren thermischen Widerstands von zumindest einem der zumindest drei Sensorelemente möglich. Die Diagnose beschränkt sich nicht nur auf eine Aussage darüber, dass sich für zumindest eines der Sensorelemente der thermische Widerstand geändert hat. Das erfindungsgemäße Verfahren ermöglicht es unter gewissen Umständen vielmehr, eine Aussage darüber zu treffen, für welches der drei Sensorelemente sich der thermische Widerstand geändert hat, bzw. für welches der thermische Widerstand konstant geblieben ist. Da darüber hinaus zwischen einer Änderung des inneren und äußeren thermischen Widerstands unterschieden werden kann, kann nicht nur das Sensorelement, für welches eine Sensordrift auftritt, identifiziert werden, sondern vielmehr auch die Ursache für die Sensordrift festgestellt werden.

Dabei können die zugeführten Heizleistungen und/oder die Temperaturen für jeweils zumindest zwei gleichzeitig beheizte Sensorelemente entweder auf den gleichen Wert oder auch auf unterschiedliche Werte eingestellt werden. Außerdem kann die sprunghafte Änderung der zugeführten Heizleistung positiv oder negativ sein.

Eine bevorzugte Variante des erfindungsgemäßen Verfahrens beinhaltet, dass das aus einem paarweisen Vergleich der Temperaturen und/oder Heizleistungen und/oder aus zumindest einer aus den Temperaturen und/oder Heizleistungen abgeleiteten Größe die Strömungsrichtung des Mediums ermittelt wird.

In einer weiteren bevorzugten Ausgestaltung des Verfahrens werden der Massedurchfluss, die Durchflussgeschwindigkeit, die Strömungsrichtung des Mediums und/oder eine Aussage über den Zustand von zumindest einem der zumindest drei Sensorelemente unterbrechungslos und zeitgleich ermittelt.

Es ist ferner von Vorteil, wenn vor dem gleichzeitigen Heizen von zumindest zwei der zumindest drei Sensorelemente mit jeweils einer einstellbaren Heizleistung ein Abgleich der gemessenen Mediumstemperaturen vorgenommen wird, und gegebenenfalls ein Temperaturkorrekturterm errechnet und auf alle folgenden Messungen angewendet wird. Dabei sind folgende Fälle denkbar: Bei Inbetriebnahme des Durchflussmessgeräts werden ein erstes und ein zweites Sensorelement aufgeheizt. Bevor diesen Sensorelementen jeweils eine Heiztemperatur zugeführt wird, wird mit beiden, oder auch mit allen Sensorelementen die Mediumstemperatur bestimmt. Weichen die unabhängig voneinander gemessenen Werte voneinander ab, wird ein Temperaturkorrekturterm errechnet. Somit lassen sich aufgrund nicht vermeidbarer Fertigungstoleranzen abweichende Messwerte und Unterschiede bei den jeweiligen Kalibrationen ausgleichen. Ein andere Fall beinhaltet, dass falls während des Betriebs zwischen den jeweils beheizten Sensorelementen hin und hergewechselt wird, ein weiterer Temperaturvergleich vorgenommen wird. Dabei kann es sich entweder um die Mediumstemperatur handeln, oder aber um die Temperaturen bei gleicher zugeführter Heizleistung.

Eine bevorzugte Ausgestaltung beinhaltet, dass ein Vergleich der Power-Koeffizienten PC der zumindest drei Sensorelemente durchgeführt wird. Der Power-Koeffizient PC ergibt sich aus einem Vergleich der einem beheizbaren Sensorelement S zugeführten Heizleistung P, sowie dessen Temperatur T mit der mittels eines weiteren unbeheizten Sensorelements $S_M$ ermittelten Mediumstemperatur $T_M$ und ist definiert als

$$PC(S, S_M) = \frac{P}{T - T_M}.$$

Es ist von Vorteil, wenn die Sprungantwort einer von der Heizleistung abhängigen charakteristischen Messgröße des Sensorelements, insbesondere der Temperatur oder des elektrischen Widerstandes, ausgewertet wird. Diese Größen lassen sich besonders einfach erfassen. Die Temperatur wird bei einem thermischen Durchflussmessgerät beispielsweise ohnehin aufgezeichnet.

Eine besonders bevorzugte Ausgestaltung beinhaltet, dass die Sprungantwort der Temperatur T(t) und/oder des Widerstandes R(t), des zumindest einen Sensorelements als Funktion der Zeit aufgezeichnet wird, wobei mittels eines Vergleichs der aufgezeichneten Sprungantwort der Temperatur und/oder des Widerstandes, des zumindest einen Sensorelements mit zumindest einer Referenzsprungantwort der Temperatur und/oder des Widerstandes auf eine Änderung des thermischen Widerstands des zumindest einen Sensorelements geschlossen wird, und wobei im Falle des Überschreitens eines vorgebbaren Grenzwertes für die Änderung des thermischen Widerstands eine Meldung über eine Fehlfunktion des zumindest einen Sensorelements generiert und ausgegeben wird. Sobald die von der Heizeinheit generierte Wärme zur Oberfläche des zumindest einen Sensorelements gelangt ist, ändert sich der Kurvenverlauf der Temperatur bzw. des elektrischen Widerstands als Funktion des äußeren Wärmeübergangskoeffizienten und/oder der äußeren Strömungsbedingungen.

In einer weiteren besonders bevorzugte Ausgestaltung wird der Gradient der Temperatur und/oder des Widerstandes ermittelt, wobei mittels eines Vergleichs des Gradienten der Sprungantwort der Temperatur und/oder des Widerstandes und/oder einer daraus abgeleiteten Größe des zumindest einen Sensorelements mit dem Gradienten von zumindest einer Referenzsprungantwort der Temperatur und/oder des Widerstandes auf eine Änderung des thermischen Widerstands des zumindest einen Sensorelements geschlossen wird, und

wobei im Falle des Überschreitens eines vorgebbaren Grenzwertes für die Änderung des thermischen Widerstands eine Meldung über eine Fehlfunktion des zumindest einen Sensorelements generiert und ausgegeben wird. Die Änderungen zwischen der gemessenen Sprungantwort und der Referenzsprungantwort werden unter Umständen durch die Betrachtung deutlicher sichtbar.

Grundsätzlich ist es von Vorteil, wenn das Zeitintervall zur Aufzeichnung der Sprungantwort der Temperatur $T(t)$ und/oder des Widerstandes $R(t)$, derart gewählt wird, dass es kleiner ist als die Zeit, welche die mittels der sprunghaften Änderung der Heizleistung zugeführte Wärme benötigt, um vom Inneren des Sensorelements zu dessen Oberfläche zu gelangen. Anhand geeigneter Abschätzungen kann ein maximale zu erwartende Zeitspanne für den Wärmetransport innerhalb des zumindest einen Sensorelements festgelegt werden. Dies erspart die Speicherung nicht benötigter Messwerte, welche zu einem Zeitpunkt aufgenommen werden, in welchen der Wärmetransport bereits durch das strömungsfähige Medium dominiert wird, und damit einhergehend werden die Kapazitäten des thermischen Durchflussmessgeräts in Bezug auf die zur Verfügung stehende Rechenleistung gespart.

Eine weitere bevorzugte Ausgestaltung des Verfahrens ist für ein thermisches Durchflussmessgerät mit genau drei Sensorelementen ausgelegt und umfasst folgende Verfahrensschritte:

im Normalbetriebsmodus wird dem ersten Sensorelement eine erste Heizleistung zugeführt, dessen Temperatur erfasst, und der Massedurchfluss und/oder die Durchflussgeschwindigkeit bestimmt,
in einem ersten Zeitintervall des Diagnosemodus werden

- das erste und das zweite Sensorelement beheizt,
- der Massedurchfluss und/oder die Durchflussgeschwindigkeit anhand des ersten Sensorelements bestimmt, und
- ein Vergleich der Power-Koeffizienten PC(S1 ,S3) und PC(S2,S3) durchgeführt,

in einem zweiten Zeitintervall des Diagnosemodus werden

- das erste und das dritte Sensorelement beheizt,
- der Massedurchfluss und/oder die Durchflussgeschwindigkeit anhand des ersten Sensorelements bestimmt, und
- ein Vergleich der Power-Koeffizienten PC(S1 ,S2) und PC(S3,S2) durchgeführt, und daraus die Richtung des strömenden Mediums ermittelt, und

in einem dritten Zeitintervall des Diagnosemodus werden

- das zweite und das dritte Sensorelement beheizt,
- der Massedurchfluss und/oder die Durchflussgeschwindigkeit anhand des zweiten Sensorelements bestimmt, und
- ein Vergleich der Power-Koeffizienten PC(S2,S1) und PC(S3,S1) durchgeführt, und daraus die Richtung des strömenden Mediums ermittelt.

In jedem der drei Zeitintervalle bleibt also ein anderes der zumindest drei Sensorelemente unbeheizt und dient der Erfassung der Mediumstemperatur $T_M$. Anhand der Vergleiche der unterschiedlichen Power-Koeffizienten in den drei Zeitintervallen wird dann eine Aussage über den Zustand von zumindest einem der zumindest drei Sensorelemente getroffen und eine Korrektur des Messwerts für den Massedurchfluss und/oder die Durchflussgeschwindigkeit durchgeführt und/oder eine Meldung über den Zustand des zumindest einen Sensorelements generiert und ausgegeben.

Dabei ist es von Vorteil, wenn zumindest eine Änderung der zumindest einem der zumindest drei Sensorelemente zugeführten Heizleistung, insbesondere für den Fall, dass ein zuvor nicht beheiztes Sensorelement beheizt wird, oder dass ein zuvor beheiztes Sensorelement nicht mehr beheizt wird, in Form einer sprunghaften Änderung der dem jeweiligen Sensorelement zugeführten Heizleistung ausgeführt wird, wobei aus der Sprungantwort des jeweiligen Sensorelements auf diese sprunghafte Änderung der Heizleistung eine Aussage über den inneren thermischen Widerstand des jeweiligen Sensorelements getroffen wird. Beispielsweise kann vor dem Start eines jeden der drei Zeitintervalle eine Analyse einer Sprungantwort für zumindest eines der zumindest drei Sensorelemente vorgenommen werden.

Es versteht sich von selbst, dass im Falle, dass das thermische Durchflussmessgerät mehr als drei Sensorelemente aufweist, der Diagnosemodus gegebenenfalls mehr als drei Zeitintervalle aufweist.

Ein Vergleich der Power-Koeffizienten verschiedener Sensorelemente kann beispielsweise anhand der eingangs bereits erwähnten sogenannten Entscheidungskoeffizienten DC durchgeführt werden. Der Entscheidungskoeffizient DC(S2,S1) zwischen zwei Sensorelementen S1 und S2 ist definiert als

$$DC(S_2, S_1) = \frac{PC_2 - PC_1}{PC_1}$$

wobei $PC_1$ und $PC_2$ die Powerkoeffizienten des ersten und zweiten Sensorelements $S_1$ und $S_2$ in Bezug auf ein drittes unbeheiztes Sensorelement $S_3$ sind.

Je nachdem, ob und wenn ja für welches der zumindest drei Sensorelemente eine Änderung des thermischen Widerstands vorliegt, müssen gegebenenfalls nicht alle drei Zeitintervalle durchlaufen werden.

Schließlich lässt sich erfindungsgemäß auch auf eine Drift des elektrischen Widerstands innerhalb zumindest eines der zumindest drei Sensorelemente schließen. Ein Sensorelement kann auch ohne das Auftreten einer Änderung des thermischen Widerstands driften. Dies führt zu einer Änderung einer Kennlinie des elektrischen Widerstands als Funktion der Temperatur des zumindest einen Sensorelements, woraus eine fehlerhafte Temperaturmessung resultiert. Eine Änderung des elektrischen Widerstands innerhalb zumindest eines Sensorelements kann nun aus einem paarweisen Vergleich der Power-Koeffizienten erkannt bzw. ermittelt werden, und zwar im unbeheizten Zustand des zumindest einen Sensorelements, beispielsweise anhand der Phasen bei der Bestimmung der Temperaturkorrekturterme. Wenn die aktuell gemessenen Temperaturkorrekturterme von denjenigen, welche zum Zeitpunkt der Fertigung des jeweiligen Sensorelements bestimmt und beispielsweise innerhalb der Elektronikeinheit hinterlegt sind, abweichen, und die Abweichung einen vorgebbaren Grenzwert überschreitet, kann aus der Abweichung auf eine Änderung des elektrischen Widerstands geschlossen werden. Auf diese Weise lässt sich zwischen einer Änderung des inneren und äußeren thermischen Widerstands sowie einer Änderung des elektrischen Widerstands unterscheiden.

Die Erfindung sowie ihre Vorteile werden anhand der nachfolgenden Figuren Fig. 1 bis Fig. 8 näher erläutert. Es zeigen

Fig. 1 eine schematische Zeichnung eines thermischen Durchflussmessgeräts gemäß Stand der Technik,

Fig. 2 schematische Zeichnungen zweier typischer Sensorelemente

Fig. 3 eine schematische Zeichnung eines thermischen Durchflussmessgeräts mit drei Sensorelementen gemäß Anspruch 4 und/oder Anspruch 5

Fig. 4 eine schematische Zeichnung eines thermischen Durchflussmessgeräts mit drei Sensorelementen, wovon eines hinter einem Staukörper angeordnet ist,

Fig. 5 einen Verlauf der Power-Koeffizienten-Kennlinien in Abhängigkeit von der Reynoldszahl bei unterschiedlicher Strömungsrichtung, und

Fig. 6 (a) eine Temperaturänderung als Funktion der Zeit in Reaktion auf eine sprunghaft geänderte Heizleistung (b) ein elektrisches Ersatzschaltbild eines Sensorelements wie in Fig. 2 dargestellt, und

Fig. 7 Graphen, welche durch Veränderungen des inneren thermischen Widerstands unterschiedliche Temperaturgradienten als Reaktion auf einen Leistungssprung an einem Sensorelement zeigen.

Fig. 8 ein Blockschaltbild eines möglichen Auswerteverfahrens.

In den Figuren sind gleiche Merkmale mit gleichen Bezugzeichen gekennzeichnet. Die erfindungsgemäße Vorrichtung in ihrer Gesamtheit hat das Bezugszeichen 1. Striche an einem Bezugszeichen weisen jeweils auf unterschiedliche Ausführungsbeispiele hin.

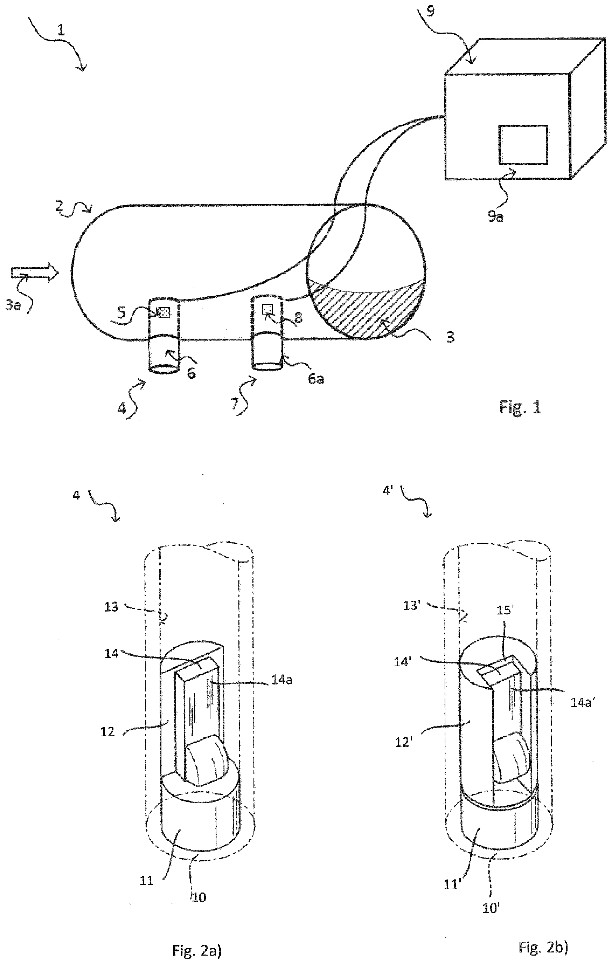

In Fig. 1 ist ein thermisches Durchflussmessgerät 1 gemäß Stand der Technik gezeigt. In eine von einem Medium 3 durchströmte Rohrleitung 2 sind zwei Sensorelemente 4,7 dicht integriert derart, dass sie zumindest teilweise und zumindest zeitweise mit dem Medium 3 in thermischem Kontakt stehen. Jedes der beiden Sensorelemente 4,7 umfasst ein Gehäuse 6,6a, welches in diesem Falle zylindrisch ausgestaltet ist, in welchem jeweils ein Temperatursensor 5,8 angeordnet ist. Insbesondere die beiden Temperatursensoren 5,8, jedes der beiden Sensorelemente 4,7 sollten in thermischem Kontakt mit dem Medium 3 stehen.

In diesem Beispiel ist das erste Sensorelement 4 als aktives Sensorelement ausgestaltet, dass es einen beheizbaren Temperatursensor 5 aufweist. Es versteht sich von selbst, dass ein Sensorelement 4 mit externem Heizelement, wie eingangs erwähnt, ebenfalls unter die vorliegende Erfindung fällt. Im Betrieb kann es entsprechend durch Zuführung einer Heizleistung P1 auf eine Temperatur T1 geheizt werden. Der Temperatursensor 8 des zweiten Sensorelements 7 ist dagegen nicht beheizbar und dient der Erfassung der Mediumstemperatur $T_M$.

Schließlich umfasst das thermische Durchflussmessgerät 1 noch eine Elektronikeinheit 9, welche der Signalerfassung, -auswertung und -speisung dient. Es sind im Laufe der Zeit sowohl thermische Durchflussmessgeräte 1 mit mehr als zwei Sensorelementen 4,7 bekannt geworden, als auch unterschiedlichste geometrische Ausgestaltungen und Anordnungen der jeweiligen Sensorelemente 4,7.

In Fig. 2 sind schematische, perspektivische Ansichten zweier Sensorelemente, wie sie beispielsweise für das in Flg.1 gezeigte Durchflussmessgerät verwendet werden können, gezeigt. Beide sind grundsätzlich als aktive Sensorelemente 4 ausgestaltet und können bei Bedarf beheizt werden. Die beiden Gehäuse 6, 6a weisen jeweils die Form einer zylindrischen Stifthülse auf. Die Stirnseiten 10, 10' ragen im Betrieb zumindest teilweise und/oder zeitweise mit dem Medium 3 in thermischem Kontakt. Bei den zum Bau der Sensorelemente 4, 4' verwendeten Materialien handelt es sich üblicherweise um solche Materialien, welche sich durch eine hohe Wärmeleitfähigkeit auszeichnen.

Der Einfachheit halber sind für die beiden Sensorelemente 4,4' jeweils die der Stirnseiten 10,10' gegenüberliegenden zweiten Endseiten, welche beispielsweise in einem Gehäuse der Elektronikeinheit oder auch an einem Sensorhalter befestigt sind, nicht dargestellt. Das gleiche gilt für die Darstellung aus Fig.1.

Das Sensorelement 4 in Fig. 2a schließt an seiner Stirnseite 10 mit einem Stopfen 11 ab, welcher üblicherweise mit dem Gehäuse 6 verschweißt ist. Dieser Stopfen sowie ein darauf folgendes Distanzstück 12 bilden in diesem Beispiel ein einteiliges, monolithisches Bauteil, welches in mechanischen und thermischen Kontakt mit der Innenseite 13 des stiftförmigen Gehäuse 6 steht. Es sind jedoch auch zweiteilige Ausführungen bekannt. Auf das Distanzstück 12 ist ferner ein Widerstandselement 14 gelötet, derart dass ein guter thermischer Kontakt und entsprechend eine gute Wärmeleitung, gewährleistet ist. Die zweite der Lötverbindung gegenüberliegende Oberfläche 14a des Widerstandselements14 ist in diesem Beispiel frei.

Eine zweite Ausgestaltung eines typischen Sensorelements ist in Fig. 2b gezeigt.

Das Distanzstück 12' bildet mit dem Gehäuse 6' in Form einer Stifthülse eine Presspassung. Üblicherweise wird es während der Fertigung mittels des Stopfens 11' von der Stirnseite 10' ausgehend in das Gehäuse 6' hineingeschoben. Der Stopfen 11' wird anschließend mit dem Gehäuse 6' verschweißt, beispielsweise über ein Laserschweißverfahren. Das Distanzstück 12' weist die Form eines Zylinders mit einer entlang der Längsachse verlaufenden Nut 15' auf, in welche ein Widerstandselement 14' gelötet ist. Die zweite der Lötverbindung gegenüberliegende Oberfläche 14a' des Widerstandselements14' ist in diesem Beispiel ebenfalls frei.

Oftmals werden in einem späteren Fertigungsschritt Hohlräume noch mit einem geeigneten Füllmaterial geringer Wärmeleitfähigkeit ausgefüllt (nicht eingezeichnet), derart dass unter anderem auch die den jeweiligen Lötverbindungen gegenüberliegenden Oberflächen 14a, 14a' des jeweiligen Widerstandselements 14,14' von dem jeweils verwendeten Füllmaterial bedeckt werden. Nicht gezeigt sind ferner jegliche notwendige Verbindungskabel.

Oft handelt es sich bei dem Widerstandselement 14,14' um ein Platinelement, beispielsweise um ein PT10, PT100, oder PT1000 Element, welches auf einem keramischen Träger angeordnet ist. Für das Distanzstück 12,12' wird wiederum häufig Kupfer verwendet, während das Gehäuse 6, 6' aus Edelstahl besteht. Optional kann das Gehäuse darüber hinaus von der äußeren Oberfläche mit einer Beschichtung versehen werden.

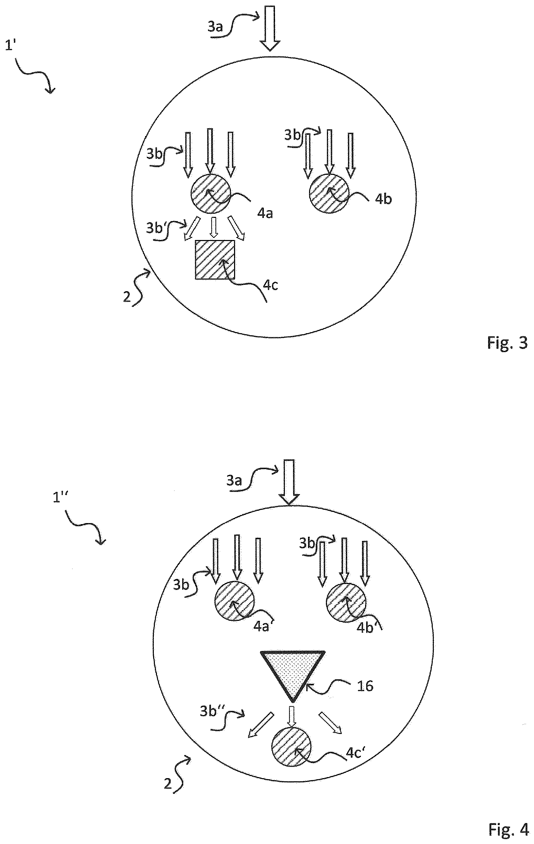

In den Figuren Fig. 3 und Fig. 4 sind zwei mögliche Anordnungen bzw. Ausgestaltungen eines thermischen Durchflussmessgeräts 1 in einer zweidimensionalen Schnittdarstellung durch die Rohrleitung gezeigt. Die makroskopische Strömungsrichtung 3a des Mediums 3 ist durch einen Pfeil skizziert. Das thermische Durchflussmessgerät 1' gemäß Fig. 3 umfasst drei aktive Sensorelemente 4a,4b,4c mit jeweils einem beheizbaren Temperatursensor (nicht extra eingezeichnet). Das erste Sensorelement 4a und das zweite Sensorelement 4b weisen eine äquivalente geometrische Ausgestaltung mit einer kreisförmigen Querschnittsfläche auf, und sind an zwei in Bezug auf die es jeweils umgebende lokale Strömung äquivalenten Positionen 3b innerhalb der Rohrleitung 2 angeordnet. Das dritte Sensorelement 4c weist eine zweite von der ersten verschiedene geometrische Ausgestaltung mit einer quaderförmigen Querschnittsfläche auf. Darüber hinaus ist das dritte Sensorelement 4c an einer zweiten, von der ersten Position 3b in Bezug auf die das Sensorelement 4c lokal umgebende Strömung verschiedenen, Position 3b' innerhalb der Rohrleitung 2 angeordnet. Die lokalen Strömungsprofile sind dabei jeweils durch Pfeile angedeutet.

In Fig. 4 ist ein weiteres thermisches Durchflussmessgerät 1'' in einer zweidimensionalen Schnittdarstellung gezeigt. Das Medium 3 strömt in die gleiche Richtung 3a wie im Beispiel gemäß Fig. 2. Auch dieses thermische Durchflussmessgerät 1'' umfasst drei aktive Sensorelemente 4a', 4b' und 4c'. Ähnlich wie in Fig. 2 sind das erste 4a' und das zweite 4b' Sensorelement symmetrisch auf gegenüberliegenden Seiten einer gedachten Achse parallel zur Rohrleitung angeordnet, während das dritte Sensorelement 4c' auf der gedachten Achse angeordnet ist, wobei zwischen der gedachten Verbindungslinie durch das erste 4a' und zweite 4b' Sensorelement und das dritte Sensorelement 4c' ein Staukörper 16 angeordnet ist, dessen Abstand zum dritten Sensorelement 4c' geringer ist als derjenige zu der gedachten Verbindungslinie. Das erste Sensorelement 4a' und das zweite Sensorelement 4b' sind ferner äquivalent ausgestaltet. Der Staukörper 16 weist eine dreiecksförmige Querschnittsfläche auf. Es versteht sich jedoch von selbst, dass auch andere geometrische Ausgestaltungen für den Staukörper 16 möglich sind. Der Staukörper 10 beeinflusst das Strömungsprofil 3a, so dass sich eine gegenüber den die Sensorelemente 4a' und 4b' umgebenden lokalen Strömungen geänderte lokale Strömung 3b'' für das dritte Sensorelement 4c' ergibt.

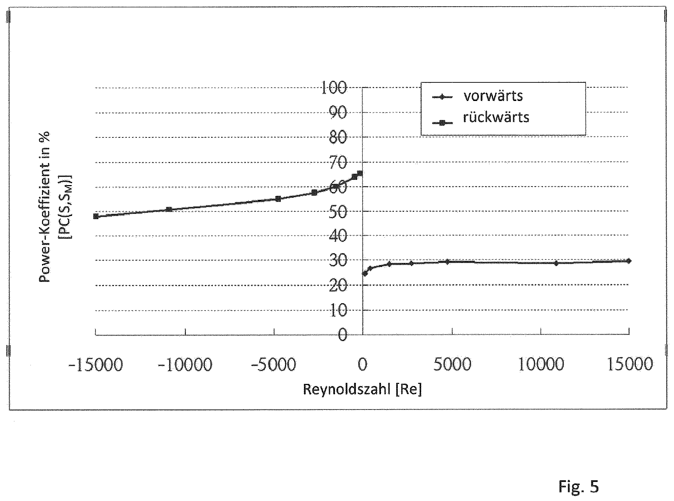

Unterschiedliche das jeweilige Sensorelement 4a,4b,4c, 4a',4b',4c' umgebende lokale Strömungen 3b,3b',3b'' haben unterschiedliche Abkühlraten der jeweiligen beheizten Sensorelemente 4a,4b,4c, 4a',4b',4c'. Entsprechend unterscheiden sich die zur Bestimmung des Massedurchflusses und/oder der Strömungsrichtung heranzuziehenden Kennlinien oder funktionalen Bestimmungsgleichungen. Darüber hinaus unterscheiden sich aufgrund unterschiedlicher Anordnungen innerhalb der Rohrleitung 2 oder aufgrund unterschiedlicher geometrischer Ausgestaltung diese Kennlinien bzw. funktionalen Zusammenhänge ebenfalls für eine vorwärts- bzw. rückwärtsgerichtete Strömung 3a. Diese Unterschiede ermöglichen beispielsweise eine zuverlässige Richtungserkennung und entsprechend eine genauere Ermittlung des Massedurchflusses und/oder der Durchflussgeschwindigkeit. Beispielhaft ist deshalb in Fig 5 eine Kennlinie des Power-Koeffizient eines kalibrierten beheizten Sensorelement S in Bezug auf ein passives, also nicht beheizte Sensorelement $S_M$

in Abhängigkeit von der Reynoldszahl Re für eine vorwärts gerichtete und für eine rückwärts gerichtete Strömung gezeigt. Im Umkehrpunkt für die Strömungsrichtung (Re=0) findet eine sprunghafte Änderung des Power-Koeffizienten statt. Darüber hinaus liegt der Powerkoeffizient für eine vorwärts gerichtete Strömung im Bereich von 20-30%, während der Power-Koeffizient für eine rückwärts gerichtete Strömung 50-60% beträgt. Entsprechend lässt sich anhand dieser Kennlinie die Strömungsrichtung exakt bestimmen, selbst wenn eine geringfügiger Drift an einem Sensorelement auftritt.

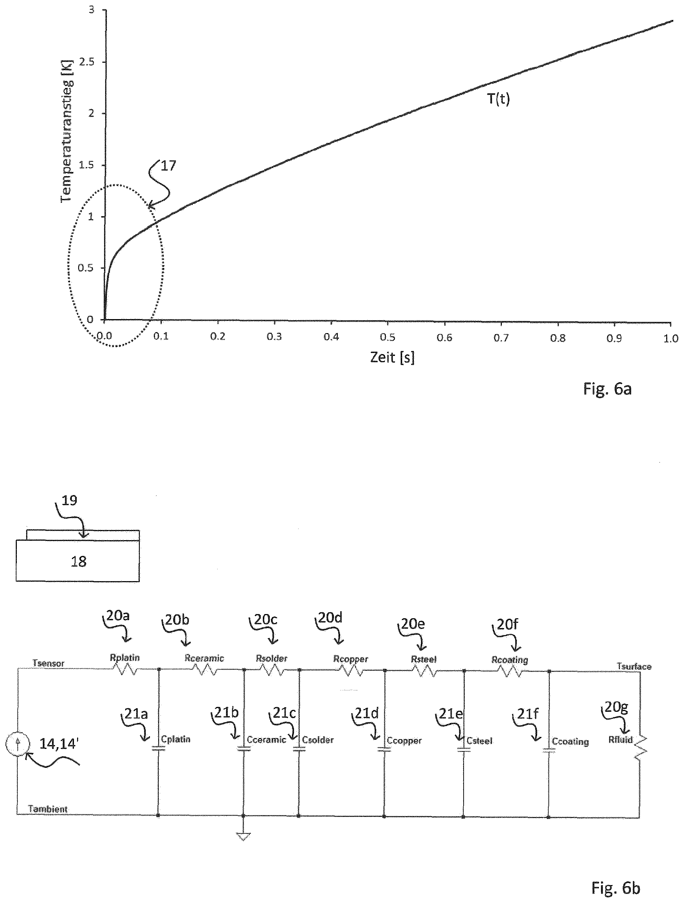

In Fig. 6a ist exemplarisch die Temperatur als Funktion der Zeit in Reaktion einer sprunghaften Änderung der zugeführten Heizleistung für ein Sensorelement wie in Fig. 2 gezeigt, dargestellt. Die nachfolgende Beschreibung bezieht sich ohne Beschränkung der Allgemeinheit ausschließlich auf die Auswertung der charakteristischen Messgröße der Temperatur. Die jeweiligen Annahmen und Ergebnisse lassen sich jedoch auf einfache Weise auch auf andere charakteristische Messgrößen, wie beispielsweise dem elektrischen Widerstand übertragen.

Zum Zeitpunkt $t_{start}$=0 werde die dem zumindest einen Sensorelement zugeführte Leistung sprunghaft von einem ersten Wert $P_1$ auf eine zweiten Wert $P_2$ geändert. Typischerweise beträgt der Leistungssprung ca. $\Delta p$=50-500mW. Vorzugsweise wird während der Durchführung des Leistungssprungs die Verlustleistung am Sensorelement konstant gehalten. Alternativ kann aber auch mit einem konstanten Strom- oder Spannungssignal gearbeitet werden. Die durch den Leistungssprung verursachte Sprungantwort der Temperatur wird dann in geeigneten Zeitabständen gemessen. Die Abtastrate beträgt typischerweise $\leq$1ms, damit eine ausreichende Anzahl an Messwerten für das geringe Zeitintervall, innerhalb von welchem die Sprungantwort erfolgt, gewährleistet ist.

Das für die Analyse der Sprungantwort interessante Zeitintervall 17 ist in Fig. 6a durch einen Kreis markiert. Es handelt sich dabei in etwa um ein Zeitintervall von typischerweise 100ms. In dieser Zeitspanne wird die Temperaturänderung als Reaktion auf den Leistungssprung lediglich vom geometrischen Aufbau des Sensorelements 4 sowie der innerhalb des Sensorelements erfolgende Wärmeausbreitung bestimmt, also von den thermischen Widerständen und Wärmekapazitäten der jeweils verwendeten Materialien. Die Abhängigkeit des Wärmetransports von den einzelnen Bauteilen und Materialübergängen kann beispielweise durch ein, wie z. B. das in Fig. 6b gezeigte, Ersatzschaltbild dargestellt werden. Links oben ist eine Skizze eines Sensorelements mit integriertem Widerstandselement 14,14' in Form eines auf einem keramischen Träger 18 angeordneten Platindünnschichtelements 19 dargestellt. Dieses ist in dem gezeigten Ersatzschaltbild als Heizquelle eingezeichnet. Jeder Komponente des Sensorelements ist ein elektrischer Widerstand 20a-f und ein dazu parallel geschalteter Kondensator 21a-f zugeordnet. Der Einfluss des strömenden Fluides ist ebenfalls in Form eines elektrischen Widerstands $R_{fluid}$ 20g berücksichtigt. Für ein Sensorelement, wie es in Fig. 2 dargestellt ist, ergeben sich dann jeweils ein Widerstand und ein Kondensator für das Platinelement ($R_{platin}$, $C_{platin}$) 20a, 21a, für den keramischen Träger ($R_{ceramic}$, $C_{ceramic}$) 20b, 21b, für die Lötverbindung ($R_{solder}$, $C_{solder}$) 20c, 21c zwischen dem Widerstandselement 14,14' und dem Distanzstück 12,12', für das Distanzstück 12,12' selbst ($R_{copper}$, $C_{copper}$) 20d, 21d, für das Gehäuse 6,6' ($R_{steel}$, $C_{steel}$) 20e, 21e und gegebenenfalls für eine Beschichtung des Gehäuses 6,6' ($R_{coating}$, $C_{coating}$) 20f, 21f. Weiterhin sind in dem Ersatzschaltbild die die jeweiligen Komponenten umgebenden Temperaturen vermerkt, nämlich die Temperatur des Sensorelements $T_{sensor}$, die Temperatur der Umgebung $T_{ambient}$ und die Temperatur an der Oberfläche des Sensorelements $T_{surface}$.

Durch eine Wahl der Messdauer, welche kleiner ist, als die für den Wärmetransport von der Heizeinheit zur Oberfläche des Sensorelements benötigten Zeit kann gewährleistet werden, dass die jeweils aufgezeichneten Messwerte, beispielsweise für die Temperatur, unabhängig von äußeren Einflüssen, insbesondere unabhängig von Änderungen des Massedurchflusses oder der Durchflussgeschwindigkeit sind. Dies ermöglicht es vorteilhaft, dass die Diagnosefunktion im fortlaufenden Betrieb des Durchflussmessgeräts durchgeführt werden kann. Idealerweise kann die Diagnosefunktion sogar parallel zur Bestimmung des Massedurchflusses und/oder der Durchflussgeschwindigkeit durchgeführt werden.

Zur Stellung einer Diagnose über die Funktionsfähigkeit des zumindest einen Sensorelements wird idealerweise die erste Ableitung, bzw. der Gradient der Temperatur betrachtet. Im vorliegenden Beispiel wird also die Anstiegsgeschwindigkeit der Temperatur analysiert. Diese ändert sich mit einer auftretenden Sensordrift. Wird die Sensordrift lediglich durch eine Änderung des inneren thermischen Widerstands hervorgerufen, so ändert sich die Anstiegsgeschwindigkeit der Temperatur mit Änderungen der inneren thermischen Widerstände und/oder Kapazitäten gemäß dem Ersatzschaltbild aus Fig. 6b. Im Falle, dass sich beispielsweise das Widerstandselement 14,14' des zumindest einen Sensorelements 4,4' löst, vergrößert sich durch Bildung einer dünnen Luftschicht der thermische Widerstand $R_{solder}$ zwischen dem Distanzstück 12,12' und dem Widerstandselement 14,14'. Da es sich bei Luft um einen guten elektrischen Isolator mit einer kleinen thermischen Wärmeleitfähigkeit handelt vergrößert sich durch die Bildung der Luftschicht die Anstiegsgeschwindigkeit der Temperatur. Der Grund hierfür besteht darin, dass die vom Widerstandselement 14,14' ausgehende Wärme nicht mehr so schnell an das Distanzstück 12,12' weitergegeben werden kann. Entsprechend steigt die Anstiegsgeschwindigkeit der am Sensorelement 4,4' gemessenen Temperatur. Ähnliche Betrachtungen können für jeden der im Ersatzschaltbild gezeigten Widerstände 20a-g sowie für die Kondensatoren 21a-f durchgeführt werden. Neben der Temperatur eignet sich als Messgröße darüber hinaus insbesondere der auf die zugeführte Heizleistung normierte Temperaturgradient.

Auf einer innerhalb der Elektronikeinheit 9 integrierten Speichereinheit 9a sind dann vorteilhaft Referenzkurven, oder Referenzwerte zu charakteristischen vorgebbaren diskreten Zeitpunkten hinterlegt, mittels welcher die jeweiligen Messwerte verglichen werden können. Wird eine vorgebbare Abweichung zwischen der jeweiligen Referenz und einer Messung festgestellt, wird eine Meldung und/oder Warnung für den Kunden generiert und ausgegeben. Dabei können die zulässigen Abweichungen jeweils spezifisch für eine Anwendung oder für die jeweiligen Anforderungen an das Durchflussmessgerät angepasst werden. Dadurch kann der Kunde je nach den von ihm vorgegebenen Genauigkeitsanforderungen zwischen verschiedenen Grenzwerten für die maximal zulässige Abweichung zwischen einem Messwert und dem zugehörigen Referenzwert wählen.

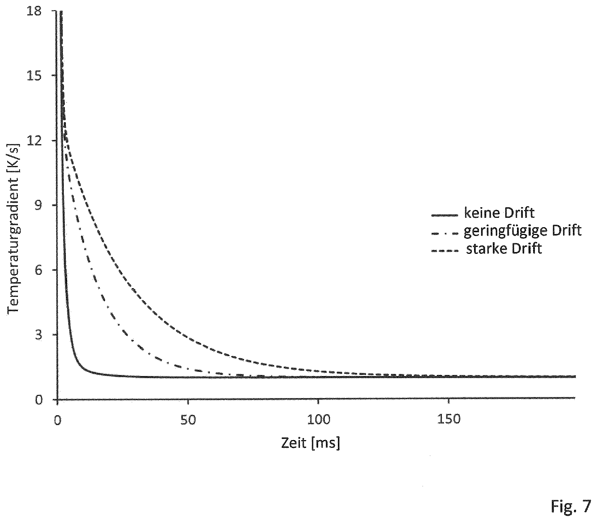

In Fig. 7 sind beispielhaft verschiedene Kurven für den Temperaturgradienten als Funktion der Zeit in einem Zeitintervall von 100ms nach einem Leistungssprung gezeigt. Die einzelnen Kurven entsprechen unterschiedlichen baugleichen Sensorelementen, für welche die Qualität der Lötverbindung zwischen dem Distanzstück 12,12' und dem Widerstandselement 14,14' variiert.

Zusätzlich zum Temperaturgradienten kann beispielsweise die Zeitkonstante $\tau$ sowie der Endwert $t_{end}$ der Sprungantwort der Temperatur als Reaktion auf einen Leistungssprung ermittelt werden. Mittels dieser zusätzlichen Größen lassen sich in Kombination mit dem jeweils zeitgleich ermittelten Massedurchfluss und/oder der Durchflussgeschwindigkeit oder bei bekannten äußeren Prozessbedingungen, wie beispielsweise während einer sogenannten Nullpunktsmessung, mittels Plausibilitätschecks bezüglich eines Soll- und Istwerts der Zeitkonstante $\tau$ oder des Temperaturanstiegs $\Delta T = t_{end} - t_{start}$ zusätzliche Diagnosen stellen. Beispielsweise könnte eine Aussage über Verschmutzungen, Belagsbildung und/oder Abtragungen an dem zumindest einen Sensorelement getroffen werden, welche auf einer Änderung des äußeren thermischen Widerstands beruhen. Herfür müssen jedoch ebenfalls sensorspezifische Kennwerte der Zeitkonstante $\tau$ oder des Temperaturanstiegs $\Delta T = t_{end} - t_{start}$ der Sprungantwort in Abhängigkeit vom Massedurchfluss, der Durchflussgeschwindigkeit oder einer mit dem Massedurchfluss und/oder der Durchflussgeschwindigkeit in einer mathematischen Beziehung stehende Größen in der Elektronikeinheit hinterlegt sein.

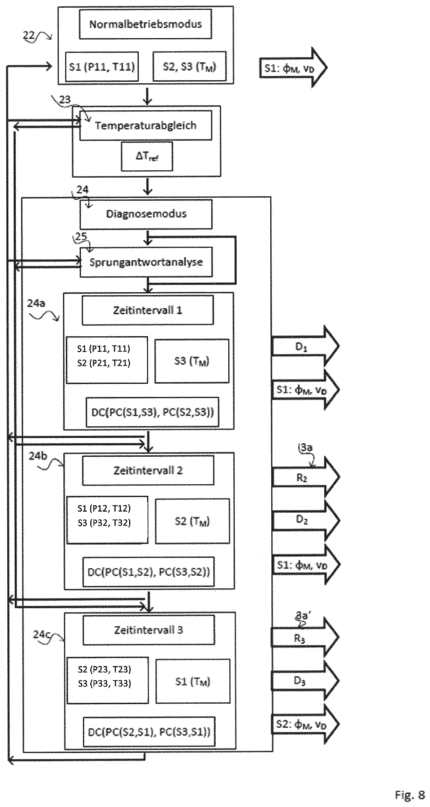

In Fig. 8 ist schließlich ein Blockschaltbild mit einem möglichen Verfahren zum Betreiben eines Durchflussmessgeräts 1 gezeigt. Der gezeigte Ablauf ist für das Beispiel eines Durchflussmessgeräts 1 mit drei Sensorelementen 4a,4b und 4c ausgelegt, insbesondere für ein Durchflussmessgerät 1'' wie in Fig. 4 dargestellt. Vorteilhaft kann der Massedurchfluss bzw. die Durchflussgeschwindigkeit kontinuierlich und mit hoher Messgenauigkeit bestimmt werden. Zusätzlich lässt sich die Strömungsrichtung des Mediums innerhalb der Rohrleitung bestimmen und eine Aussage über den Zustand von zumindest einem der zumindest drei Sensorelemente treffen. Idealerweise kann sogar ermittelt werden, für welches der drei Sensorelemente 4a,4b,4c eine Änderung des thermischen Widerstands stattgefunden hat.

Im Folgenden wird der Einfachheit halber das erste Sensorelement, z. B. das in Fig. 4 mit 4a' bezeichnete Sensorelement mit S1 bezeichnet, das zweite Sensorelement, z. B. 4b' wird mit S2 bezeichnet und das dritte, z. B. 4c' mit S3.

Im Normalbetriebsmodus 22 wird zumindest S1 durch Zuführung der Heizleistung P11 auf eine erste Temperatur T11 geheizt. S2 und S3 dagegen bleiben unbeheizt und dienen der Erfassung der Mediumstemperatur $T_M$. Es versteht sich von selbst, dass prinzipiell jedes der drei Sensorelemente S1, S2, S3 im Normalbetriebsmodus 22 beheizt werden kann, bzw. unbeheizt bleiben kann. Aus der Heizleistung P11, der Temperatur T11 des beheizten Sensorelements S1 sowie der Mediumstemperatur $T_M$ kann dann der Massedurchfluss $\Phi_M$ bzw. die Durchflussgeschwindigkeit $v_D$ bestimmt werden.

Bevor der sogenannte Diagnosemodus 24 aktiviert wird, kann optional ein Temperaturabgleich 23 durchgeführt werden. Dabei werden die Temperaturen der beiden unbeheizten Sensorelemente S2 und S3 verglichen. Im Falle, dass eine Abweichung $\Delta T_{2,3}$ der mittels der beiden Sensorelemente erhaltenen Messwerte für die Mediumstemperatur $T_M$ festgestellt wird, kann ein sogenannter Temperaturkorrekturterm ermittelt und auf alle folgenden Messungen angewendet werden, beispielsweise derart, dass $T(S3) + \Delta T_{kor,2,3} = T(S2)$.

Im Diagnosemodus 24 sind nun verschiedene Möglichkeiten denkbar. Die Grundidee besteht darin, in unterschiedlichen Zeitintervallen jeweils zweien der drei Sensorelemente gleiche oder unterschiedliche Heizleistungen zuzuführen und eines der Sensorelemente unbeheizt zu lassen. Aus einem paarweisen Vergleich der Temperaturen und/oder Heizleistungen der beiden jeweils beheizten und der Temperatur des jeweils unbeheizten Sensorelements und/oder aus zumindest einer aus den Temperaturen und/oder Heizleistungen abgeleiteten Größe kann dann eine Aussage über den Zustand von zumindest einem der zumindest drei Sensorelemente getroffen und/oder eine Korrektur des Messwerts für den Massedurchfluss und/oder die Durchflussgeschwindigkeit durchgeführt und/oder eine Meldung über den Zustand von zumindest einem der zumindest drei Sensorelemente zu generiert und ausgegeben werden. Darüber hinaus kann bei jeder für jedes der drei Sensorelemente vorzunehmenden Änderung der zugeführten Heizleistung eine Analyse der Sprungantwort 25 vorgenommen werden. Alternativ kann die Sprungantwortanalyse 25 auch nur bei Bedarf mit ausgeführt werden, wobei ansonsten der Diagnosemodus 24 ohne eine Sprungantwortanalyse vollzogen wird. Durch die Durchführung einer Sprungantwortanalyse 25 lässt sich aussagen, ob sich der innere oder der äußere thermische Widerstand von zumindest einem der Sensorelemente S1, S2, S3 geändert hat. Es lässt sich also nicht nur feststellen, welches der drei Sensorelemente S1, S2, S3 eine Sensordrift zeigt, sondern auch, welche Ursache diese Sensordrift hat. Liegt keine Änderung des inneren thermischen Widerstands, welcher mittels der Sprungantwortanalyse 25 ermittelt wird, vor, so kann beispielsweise auf eine Änderung des äußeren thermischen Widerstands geschlossen werden.

In dem in Fig. 8 gezeigten Blockschaltbild werden in einem ersten Zeitintervall 24a S1 und S2 beheizt, während S3 unbeheizt bleibt. In einem zweiten (dritten) Zeitintervall 24b (24c) werden dann S1 und S3 (S2 und S3) geheizt, während wiederum S2 (S1) unbeheizt bleiben. Vor jedem Wechsel der jeweils beiden beheizten Sensorelemente kann erneut optional ein Temperaturabgleich 23 durchgeführt werden, und gegebenenfalls ein weiterer Temperaturkorrekturterm $\Delta T_{kor,1,2}$ oder $\Delta T_{kor,1,3}$ ermittelt werden. Diese Möglichkeit ist durch die jeweils unterschiedlichen Intervalle 24a-c und den Abschnitt für den Temperaturabgleich 23 verbindenden Pfeile angedeutet. Dann bietet es sich beispielsweise an, vor dem ersten Zeitintervall 24a eine Sprungantwortanalyse 25, wie anhand der Figuren Fig. 5 und Fig. 6 erläutert, in Bezug auf das zweite Sensorelement S2 vorzunehmen, und zwar während des Einschaltens der Heizleistung P12. Beim Start des zweiten Zeitintervalls 24b kann wiederum eine Sprungantwortanalyse für das Sensorelement S2 während des Abschaltens der Heizleistung P12, oder für das dritte Sensorelement während des Anschaltens der Heizleistung P32 durchgeführt werden. Vor Start des dritten Zeitintervalls 24c kann dann entweder eine Sprungantwortanalyse in Bezug auf das erste Sensorelement S1 (Abschaltvorgang) oder in Bezug auf das zweite Sensorelement S2 (Anschaltvorgang) vorgenommen werden. Dies ist durch die jeweiligen Pfeile zwischen den einzelnen Zeitintervallen 24a-c und der Sprungantwortanalyse 25 angedeutet. Die Voraussetzung für dieses Vorgehen besteht darin, dass die unterschiedlichen Heizleistungen jeweils abrupt und sprunghaft an- bzw. abgeschaltet werden.

Eine Möglichkeit, eine Aussage über den Zustand von zumindest einem der zumindest drei Sensorelemente anhand eines paarweisen Vergleichs der Temperaturen und/oder Heizleistungen zu gewinnen, besteht in der Berechnung der jeweiligen Powerkoeffizienten PC(S1,S2), PC(S1,S3), PC(S2,S3), PC(S3,S2), PC(S3,S1) und/oder PC(S2,S1) und der jeweiligen Entscheidungskoeffizienten in jedem der Zeitintervalle 24a-c. Aus einem Vergleich der verschiedenen Entscheidungskoeffizienten wiederum lässt sich falls möglich ermitteln, für welches der drei Sensorelemente S1, S2, S3 sich der thermische Widerstand geändert hat. Je nach Größe der Änderung des thermischen Widerstandes für das jeweilige Sensorelement kann entweder, falls die Änderung nur geringfügig ist, eine Korrektur des jeweils ermittelten Messwerts für den Massedurchfluss $\Phi_M$ und/oder die Durchflussgeschwindigkeit $v_D$ vorgenommen werden. Ist jedoch die Änderung größer als ein vorgebbarer Grenzwert, so wird eine Meldung über den Zustand des jeweiligen Sensorelements S1, S2, S3 oder darüber dass sich der thermische Widerstand für zumindest eines der zumindest drei Sensorelemente S1, S2, S3 geändert hat, generiert und ausgegeben. Falls die Sprungantwortanalyse 25 ebenfalls durchgeführt wurde, kann ferner zwischen einer Änderung des inneren und äußeren thermischen Widerstands unterschieden werden. Im Falle, dass bekannt ist, an welchem der zumindest drei Sensorelemente S1, S2, S3 eine Änderung des thermischen Widerstands stattgefunden hat, kann der Messbetrieb entsprechend dem Normalbetriebsmodus 22 auch mit den verbleibenden zwei funktionsfähigen Sensorelementen durchgeführt werden, bis zu dem Zeitpunkt, an welchem das gedriftete Sensorelement gewartet wird.

Je nach Konfiguration müssen nicht alle drei Zeitintervalle 24a-c durchgeführt werden, weil beispielsweise entweder an keinem der Sensorelemente S1, S2, S3 eine Änderung des thermischen Widerstandes festgestellt wird, oder bereits nach dem ersten oder zweiten Zeitintervall festgestellt werden kann, für welches der Sensorelemente S1, S2, S3 eine Änderung des thermischen Widerstands aufgetreten ist.

Sofern alle drei Zeitintervalle 24a, 24b und 24c durchlaufen werden, so werden drei verschiedene Diagnoseinformationen D1, D2 und D3 ermittelt, welche sich aus einem Vergleich der in jedem der Zeitintervalle 24a-c ermittelbaren Power-Koeffizienten, beispielsweise anhand der jeweiligen Entscheidungskoeffizienten ergeben. Gegebenenfalls beinhalten die Diagnoseinformationen D1, D2 und D3 darüber hinaus die Ergebnisse der jeweiligen Sprungantwortanalyse 25. Durch einen Vergleich der drei Diagnoseinformationen D1, D2 und D3 kann schließlich, falls möglich, ermittelt werden, für welches der drei Sensorelemente S1, S2 oder S3 sich der innere oder äußere thermische Widerstand geändert hat. Im Falle einer Änderung des äußeren thermischen Widerstands, wenn also beispielsweise eine Verschmutzung oder Belagsbildung aufgetreten ist, kann der Kunde selbst einfach und vor Ort eine Reinigung durchführen, ohne dass das betroffene Sensorelement ausgetauscht werden muss.

In dem hier gezeigten Beispiel wird ferner im zweiten 24b und dritten 24c Zeitintervall des Diagnosemodus 24 eine Richtungserkennung 3a durchgeführt. Da das hier gezeigte Ablaufdiagramm auf einen Sensor gemäß der Fig. 4 zugeschnitten ist, ist die S3 lokal umgebende Strömung 3b" von den S1 und S2 jeweils lokal umgebenden Strömungen 3a verschieden, so dass eine Richtungserkennung 3a genau dann am effektivsten vollzogen werden kann, wenn es sich bei einem der jeweils zwei beheizten Sensorelemente um S1 oder S2 und beim zweiten beheizten Sensorelement um S3 handelt.

Im dritten Zeitintervall 24c werden S2 und S3 beheizt. Entsprechend sollte für eine kontinuierliche Bestimmung des Massedurchflusses $\Phi_M$ und/oder der Durchflussgeschwindigkeit $v_D$ zumindest für dieses Zeitintervall von S1 auf S2 gewechselt werden. Vor dem Wechsel bietet sich daher insbesondere ein Temperaturabgleich 23 an. Ähnliches gilt im Falle, dass eine Änderung des thermischen Widerstands von S3 festgestellt wird. Der Kunde sollte aber gegebenenfalls mittels einer Meldung darüber informiert werden, dass eine Wartung des thermischen Durchflussmessgeräts 1 notwendig wird.

Ergibt sich aus dem Diagnosemodus 24, dass der (innere oder äußere) thermische Widerstand von S1 sich geändert hat, so kann für den Normalmodus 22 von S1 auf S2 umgeschaltet werden, so dass weiterhin eine korrekte und genaue Bestimmung des Massedurchflusses $\Phi_M$ und/oder der Durchflussgeschwindigkeit $v_D$ gewährleistet ist.

Je nach Wunsch des Kunden kann entweder der Diagnosemodus 24 und/oder die Richtungserkennung 3a nur auf Bedarf aktiviert werden. Es ist jedoch ebenfalls möglich, den Diagnosemodus 24 und/oder eine Richtungserkennung 3a kontinuierlich und parallel zur Bestimmung des Massedurchflusses $\Phi_M$ und/oder der Durchflussgeschwindigkeit $v_D$ durchzuführen. Auch kann der Kunde wählen, ob die Sprungantwortanalyse 25 innerhalb des Diagnosemodus 24 kontinuierlich oder nur bei Bedarf ausgeführt werden soll. Die Richtungserkennung 3a wird z. B. in Fig. 8 wiederholend in den Zeitintervallen 24b und 24c durchgeführt und die jeweils gewonnenen Aussagen über die Strömungsrichtung $R_2$ und $R_3$ können beispielsweise zur Überprüfung des Messergebnisses miteinander verglichen werden. In diesen Zeitintervallen wird nämlich das dritte S3 hinter dem Staukörper 16 angeordnete Sensorelement beheizt, was für die Genauigkeit der Richtungserkennung 3a besonders vorteilhaft ist. Durch einen Vergleich zweier an äquivalenten Positionen angeordneten und gleichartig ausgestalteten Sensorelementen kann normalerweise keine genaue Richtungserkennung vorgenommen werden.

Zur Auswertung der in den verschiedenen Zeitintervallen 24a-c des Diagnosemodus 24 gewonnenen Diagnoseinformationen D1, D2 und D3 kann bezüglich einer Änderung des äußeren thermischen Widerstands angenommen werden, dass eine Verschmutzung und/oder Belagsbildung an zumindest einem der drei Sensorelemente eine negative Verschiebung des jeweiligen Power-Koeffizienten gegenüber dem Normalzustand zur Folge hat, während das Auftreten einer Abrasion zu einer positiven Verschiebung führt.

Wird eine andere als das in Fig. 8 gezeigte Diagramm herangezogene Anordnung und/oder Ausgestaltung des thermischen Durchflussmessgeräts gewählt, sind die einzelnen Schritte gegebenenfalls geringfügig abzuändern. Unabhängig von der Anzahl der Sensorelemente sowie deren Anordnung und/oder Ausgestaltung bleibt der grundlegende Ablauf des Abwechselns zwischen einem Normalmodus 22 und einem Diagnosemodus 24 bestehen. Ebenfalls bleibt die Möglichkeit, optional einen Temperaturabgleich 23 und/oder eine Richtungserkennung 3a durchzuführen, bestehen. Außerdem beruht jedes erfindungsgemäße Verfahren auf einem paarweisen Vergleich der Temperaturen und/oder Heizleistungen zweier jeweils beheizter Sensorelemente und der Temperatur eines dritten nicht beheizten Sensorelements und/oder aus zumindest einer aus den Temperaturen und/oder Heizleistungen abgeleiteten Größe. Dabei können in unterschiedlichen Zeitintervallen jeweils unterschiedliche Sensorelemente geheizt werden. Jede Änderung der einem der Sensorelemente zugeführten Heizleistung kann mit einer Sprungantwortanalyse 25 einhergehen.

In seiner Gesamtheit bietet ein erfindungsgemäßes Durchflussmessgerät und/oder die Anwendung eines erfindungsgemäßen Verfahrens also folgende Vorteile:

1) Eine aufgrund einer Änderung des inneren oder äußeren thermischen Widerstands hervorgerufene Sensordrift kann unabhängig von äußeren Einflüssen, wie beispielsweise einer zeitlich nicht konstanten Strömung des Mediums detektiert werden.

2) Es kann ermittelt werden, für welches Sensorelement eine Sensordrift vorliegt.

3) Die Ursache der Sensordrift ist feststellbar, d.h. es ist feststellbar, ob eine Änderung des inneren oder äußeren thermischen Widerstands stattgefunden hat.

4) Die Diagnosefunktion kann im laufenden Betrieb, also unter Prozessbedingungen durchgeführt werden.

5) Keine zusätzlichen Installationen sind notwendig.

6) Die Unterbrechung des Messbetriebs zur Durchführung einer Sprungantwortanalyse beträgt maximal $\approx$1s, falls die Durchführung dieser Analyse nicht ohnehin Bestandteil des Diagnosemodus ist; ein paarweiser Vergleich von Heizleistungen und/oder Temperaturen kann sogar parallel zum Messbetrieb erfolgen.

7) Durch Auswertung mehrerer mit der Sprungantwort zusammenhängender Kenngrößen helfen ggf. bei der Detektion einer Änderung des äußeren thermischen Widerstands.

8) Die Messwertauswertung während der Ausführung der Diagnosefunktion ist einfach zu realisieren.

**Bezugszeichenliste**

| 1 | Thermisches Durchflussmessgerät |
| 2 | Rohrleitung, bzw. Messrohr |

| 3 | Medium |
|---|---|
| 3a | makroskopische Strömungsrichtung |
| 3b | lokale ein Sensorelement umgebende Strömung |
| 4 | aktives Sensorelement |
| 4a,4b,4c | unterschiedliche Anordnungen/Ausgestaltungen eines aktiven Sensorelements |
| 5 | beheizbarer Temperatursensor |
| 5a,5b,5c | beheizbarer Temperatursensor der Sensorelemente 4a,4b,4c |
| 6,6a | Gehäuse |
| 7 | passives Sensorelement |
| 8 | Temperatursensor |
| 9 | Elektronikeinheit |
| 9a | Speichereinheit der Elektronikeinheit |
| 10 | Stirnseite eines Sensorelements |
| 11 | Stopfen |
| 12 | Distanzstück |
| 13 | Innenseite des stiftförmigen Gehäuse |
| 14 | Widerstandselement |
| 15 | Nut des Distanzstücks |
| 16 | Staukörper |
| 17 | für die Sprungantwort interessantes Zeitintervall |
| 18 | keramischer Träger eines Widerstandselements |
| 19 | Platinelement eines Widerstandselements |
| 20,20a-g | elektrische Widerstände für ein Ersatzschaltbild des Wärmetransports durch ein Sensorelement |
| 21,21a-f | Kondensatoren für ein Ersatzschaltbild des Wärmetransports durch ein Sensorelement |
| 22 | Normalbetriebsmodus |
| 23 | Temperaturabgleich |
| 24 | Diagnosemodus |
| 24a,24b,24c | erstes, zweites, drittes Zeitintervall des Diagnosemodus |
| 25 | Sprungantwortanalyse |
| S1 | erstes Sensorelement, z.B. 4a |
| S2 | zweites Sensorelement, z. B. 4b |
| S3 | drittes Sensorelement, z. B. 4c |
| Pxy | dem Sensorelement Sx im Zeitintervall y zugeführte Heizleistung |
| Txy | Temperatur des Sensorelements Sx im Zeitintervall y |
| PC | Power-Koeffizient |
| DC | Entscheidungskoeffizient |
| $D_1,D_2,D_3$ | Diagnoseinformationen |
| $R_2 R_3$ | Strömungsrichtung des Mediums# |
| $\Phi_M$ | Massedurchfluss |
| $v_D$ | Durchflussgeschwindigkeit |
| $T_M$ | Mediumstemperatur |
| $\Delta T_{kor,x,y}$ | Temperaturkorrekturterm für den Abgleich zwischen Sensorelement x und y |
| $\Delta T$ | Temperaturanstieg in Bezug auf die einem der Sensorelemente zugeführte Heizleistung |

**Patentansprüche**

1. Thermisches Durchflussmessgerät (1) zur Bestimmung und/oder Überwachung des Massedurchflusses ($\Phi_M$) und/oder der Durchflussgeschwindigkeit ($v_D$) eines strömungsfähigen Mediums (3) durch eine Rohrleitung (2)

mit zumindest drei Sensorelementen (4a,4b,4c) und einer Elektronikeinheit (9),
wobei jedes der zumindest drei Sensorelemente (4a,4b,4c)

- zumindest teilweise und/oder zeitweise mit dem Medium (3) in thermischem Kontakt steht, und
- einen beheizbaren Temperatursensor (5a,5b,5c) umfasst, und

wobei die Elektronikeinheit (9) dazu ausgestaltet ist,

- jedes der drei Sensorelemente (4a,4b,4c) mit einer Heizleistung (P1,P2,P3) zu heizen,
- dessen Temperatur (T1,T2,T3) zu erfassen,
- zumindest zwei der zumindest drei Sensorelemente (4a,4b,4c) gleichzeitig zu heizen, wobei zumindest eines der drei Sensorelemente unbeheizt bleibt und zur Erfassung der Temperatur des Mediums dient,
- kontinuierlich den Massedurchfluss ($\Phi_M$) und/oder die Durchflussgeschwindigkeit ($v_D$) des Mediums (3) zu ermitteln, und gleichzeitig
- aus einem paarweisen Vergleich der Temperaturen (T1,T2,T3) und/oder Heizleistungen (P1,P2,P3) der zumindest drei Sensorelemente (4a,4b,4c) und/oder zumindest einer aus zumindest einer der Temperaturen (T1,T2,T3) und/oder Heizleistungen (P1,P2,P3) abgeleiteten Größe eine Aussage über eine Änderung des thermischen Widerstands von zumindest einem der zumindest drei Sensorelemente (4a,4b,4c) zu treffen,
- aus einer Sprungantwort auf eine sprunghafte Änderung der zugeführten Heizleistung $\Delta P$ an zumindest einem der zumindest drei Sensorelemente eine Aussage über eine Änderung des inneren thermischen Widerstands des zumindest einen Sensorelements zu treffen, und
- im Falle dass eine Änderung des inneren und/oder äußeren thermischen Widerstands an zumindest einem der zumindest drei Sensorelemente (4a,4b,4c) auftritt, eine Korrektur des Messwerts für den Massedurchflusses ($\Phi_M$) und/oder der Durchflussgeschwindigkeit ($v_D$) durchzuführen und/oder eine Meldung über den Zustand des zumindest einen Sensorelements zu generieren und auszugeben.

2. Thermisches Durchflussmessgerät nach Anspruch 1,
wobei die Elektronikeinheit (9) dazu ausgestaltet ist, die Strömungsrichtung (3a) des strömungsfähigen Mediums (3) zu bestimmen.

3. Thermisches Durchflussmessgerät nach zumindest einem der vorherigen Ansprüche,

> wobei zumindest eines der zumindest drei Sensorelemente (4a,4b,4c) eine erste Ausgestaltung (4a,4b), bezogen auf die Geometrie, Aufbau und Material, aufweist, und zumindest ein zweites der zumindest drei Sensorelemente (4a,4b,4c) eine zweite von der ersten verschiedene Ausgestaltung (4c) aufweist, und/oder wobei zumindest zwei (4a,4b) der zumindest drei Sensorelemente (4a,4b,4c) an in Bezug auf die es jeweils lokal umgebende Strömung (3a) des Mediums (3) zwei ersten äquivalenten Positionen innerhalb der Rohrleitung (2) angeordnet sind, und wobei zumindest eines (4c) der zumindest drei Sensorelemente (4a,4b,4c) an einer in Bezug auf die es lokal umgebende Strömung (3b) des Mediums (3) zweiten von der ersten verschiedenen Position innerhalb der Rohrleitung (2) angeordnet ist.

4. Thermisches Durchflussmessgerät nach zumindest einem der vorhergehenden Ansprüche,
wobei zumindest eines (4c) der zumindest drei Sensorelemente (4a,4b,4c) in Bezug auf die Längsachse durch die Rohrleitung in unmittelbarer Umgebung vor oder hinter einem Staukörper (16), oder einem anderen strömungsbeeinflussenden Modul, angeordnet ist derart, dass das lokale das jeweilige Sensorelement (4a,4b,4c) umgebende Strömungsprofil durch den Staukörper (16) gezielt verändert wird.

5. Thermisches Durchflussmessgerät nach Anspruch 4,
wobei die Querschnittsfläche des Staukörpers (16) ein Dreieck, ein Rechteck, ein Parallelogramm, ein Trapez, ein Kreis oder eine Ellipse ist.

6. Thermisches Durchflussmessgerät nach zumindest einem der vorhergehenden Ansprüche,

> mit genau drei Sensorelementen (4a,4b,4c), wobei zumindest eines der drei Sensorelemente (4c) in unmittelbarer Umgebung eines Staukörpers (16), oder eines anderen strömungsbeeinflussenden Moduls, angeordnet ist derart, dass das lokale das jeweilige Sensorelement (4a,4b,4c) umgebende Strömungsprofil durch den Staukörper (10) gezielt verändert, und wobei das erste (4a, S1) und das zweite Sensorelement (4b, S2) symmetrisch auf gegenüberliegenden Seiten einer gedachten Achse parallel zur Rohrleitung (2) angeordnet sind, wobei das dritte Sensorelement (4c, S3) auf der gedachten Achse angeordnet ist, und wobei zwischen der gedachten Verbindungslinie durch das erste (4a,S1) und das zweite Sensorelement (4b,S2) und dem dritten Sensorelement (4c, S3) ein Staukörper (10) angeordnet ist, dessen Abstand zum dritten Sensorelement (4c,S3) geringer ist als derjenige zu der gedachten Verbindungslinie.

7. Thermisches Durchflussmessgerät nach zumindest einem der vorhergehenden Ansprüche,
wobei die Elektronikeinheit (9) eine Speichereinheit (9a) umfasst, auf welcher Speichereinheit (9a) zumindest eine Referenz für eine Reaktion des Sensorelements (4,7) auf eine sprunghafte Änderung der zugeführten Leistung ($\Delta P$) im funktionsfähigen Zustand gespeichert ist.

8. Verfahren zum Betreiben eines thermischen Durchflussmessgeräts (1) zur Bestimmung und/oder Überwachung des Massedurchflusses ($\Phi_M$) und/oder der Durchflussgeschwindigkeit ($v_D$) eines strömungsfähigen Mediums (3) durch eine Rohrleitung (2) mit zumindest drei Sensorelementen (S1,S2,S3) und einer Elektronikeinheit (9) nach zumindest einem der vorhergehenden Ansprüche, in einem Normalbetriebsmodus (22) und in einem Diagnosemodus (24),

> wobei im Normalbetriebsmodus (22) zumindest eines (S1) der zumindest drei Sensorelemente (S1,S2,S3) mit einer einstellbaren (P1) Heizleistung beheizt, und dessen Temperatur (T1) erfasst wird, und der Massedurchflusses ($\Phi_M$) und/oder der Durchflussgeschwindigkeit ($v_D$) des Mediums (3) bestimmt wird, und wobei im Diagnosemodus (24) zumindest folgende Ablaufschritte durchgeführt werden:
>
>> - ein erstes Sensorelement (S1) wird mit einer ersten Heizleistung (P11) beheizt und dessen Temperatur (T11) erfasst,
>> - ein zweites Sensorelement (S2) wird mit einer zweiten Heizleistung (P12) beheizt und dessen Temperatur (T12) erfasst,
>> - die Temperatur des Mediums ($T_M$) wird mittels eines nicht beheizten dritten Sensorelements (S3) erfasst,

- aus der Heizleistung (P11, P12) und/oder Temperatur (T11,T12) des ersten (S1) oder zweiten (S2) Sensorelements und/oder zumindest einer aus zumindest einer dieser Größen abgeleiteten Größe wird der Massedurchflusses ($\Phi_M$) und/oder der Durchflussgeschwindigkeit ($v_D$) des Mediums (3) bestimmt,

- aus einem paarweisen Vergleich der Temperaturen (T11,T12,...) und/oder Heizleistungen (P11, P12,...) des ersten (S1) und/oder zweiten (S2) Sensorelements und der Temperatur ($T_M$) des dritten Sensorelements (S3) und/oder aus zumindest einer aus den Temperaturen (T11,T12,...) und/oder Heizleistungen (P11, P12,...) abgeleiteten Größe wird eine Aussage über eine Änderung des thermischen Widerstands von zumindest einem der zumindest drei Sensorelemente (S1,S2,S3) getroffen,

- aus einer Sprungantwort auf eine sprunghafte Änderung der zugeführten Heizleistung ∆P an zumindest einem der zumindest drei Sensorelemente wird eine Aussage über eine Änderung des inneren thermischen Widerstands des zumindest einen Sensorelements getroffen, und

- es wird Korrektur des Messwerts für den Massedurchflusses ($\Phi_M$) und/oder der Durchflussgeschwindigkeit ($v_D$) durchgeführt und/oder eine Meldung über den Zustand ($D_1,D_2,D_3$) von zumindest einem der zumindest drei Sensorelemente (S1,S2,S3) generiert und ausgegeben.

9. Verfahren nach Anspruch 8,
   wobei aus einem paarweisen Vergleich der Temperaturen (T11,T12,...) und/oder Heizleistungen (P11, P12,...) und/oder aus zumindest einer aus den Temperaturen(T11,T12,...) und/oder Heizleistungen (P11, P12,...) abgeleiteten Größe die Strömungsrichtung (3a) des Mediums ermittelt (3) wird.

10. Verfahren nach zumindest einem der Ansprüche 8 oder 9,
    wobei vor dem gleichzeitigen Heizen von zumindest zwei der zumindest drei Sensorelemente (S1,S2,S3) mit einer einstellbaren Heizleistung (P1, P2,P3) ein Abgleich (12) der gemessenen Mediumstemperaturen ($T_M$) vorgenommen wird, und gegebenenfalls ein Temperaturkorrekturterm ($\Delta T_{kor,1,2}$, $\Delta T_{kor,1,3}$, $\Delta T_{kor,2,3}$) errechnet und auf alle folgenden Messungen angewendet wird.

11. Verfahren nach zumindest einem der Ansprüche 8-10,
    wobei ein Vergleich der Power-Koeffizienten PC der zumindest drei Sensorelemente (S1,S2,S3) durchgeführt wird.

12. Verfahren nach zumindest einem der Ansprüche 8-11,
    wobei die Sprungantwort einer von der Heizleistung (P) abhängigen charakteristischen Messgröße des Sensorelements (4,7), insbesondere der Temperatur (T) oder des elektrischen Widerstandes (R), ausgewertet wird.

13. Verfahren nach Anspruch 12,

    wobei die Sprungantwort der Temperatur (T(t)) und/oder des Widerstandes (R(t)) des zumindest einen Sensorelements (4,7) als Funktion der Zeit (t) aufgezeichnet wird,
    wobei mittels eines Vergleichs der aufgezeichneten Sprungantwort der Temperatur (T(t)) und/oder des Widerstandes (R(t)) des zumindest einen Sensorelements (4,7) mit zumindest einer Referenzsprungantwort der Temperatur (T(t)) und/oder des Widerstandes (R(t)) auf eine Änderung des thermischen Widerstands des zumindest einen Sensorelements (4,7) geschlossen wird, und
    wobei im Falle des Überschreitens eines vorgebbaren Grenzwertes für die Änderung des thermischen Widerstands eine Meldung über eine Fehlfunktion des zumindest einen Sensorelements (4,7) generiert und ausgegeben wird.

14. Verfahren nach Anspruch 12 oder 13,

    wobei der Gradient der Temperatur (T) und/oder des Widerstandes (R) ermittelt wird, und
    wobei mittels eines Vergleichs des Gradienten der Sprungantwort der Temperatur (T) und/oder des Widerstandes (R) und/oder einer daraus abgeleiteten Größe des zumindest einen Sensorelements (4,7) mit dem Gradienten von zumindest einer Referenzsprungantwort der Temperatur (T) und/oder des Widerstandes (R) auf eine Änderung des thermischen Widerstands des zumindest einen Sensorelements (4,7) geschlossen wird, und
    wobei im Falle des Überschreitens eines vorgebbaren Grenzwertes für die Änderung des thermischen Widerstands eine Meldung über eine Fehlfunktion des zumindest einen Sensorelements (4,7) generiert und ausgegeben wird.

15. Verfahren nach zumindest einem der Ansprüche 8-14,
    wobei ein Zeitintervall (17) zur Aufzeichnung der Sprungantwort der Temperatur (T) und/oder des Widerstandes (R), derart gewählt wird, dass es kleiner ist als die Zeit, welche die mittels der sprunghaften Änderung der Heizleistung (∆P) zugeführte Wärme

benötigt, um vom Inneren des Sensorelements (4,7) zu dessen Oberfläche zu gelangen.

**Claims**

1. Thermal flowmeter (1) designed to determine and/or monitor the mass flow ($\Phi_M$) and/or the flow velocity ($v_D$) of a medium (3) that can flow through a pipe (2) with at least three sensor elements (4a, 4b, 4c) and an electronics unit (9),

   wherein each of the at least three sensor elements (4a, 4b, 4c)

   - are at least partially and/or temporarily in thermal contact with the medium (3) and
   - comprise a heatable temperature sensor (5a, 5b, 5c), and

   wherein the electronics unit (9) is designed to

   - heat each of the three sensor elements (4a, 4b, 4c) with a heating power (P1, P2, P3)
   - measure their temperatures (T1, T2, T3),
   - simultaneously heat at least two of the at least three sensor elements (4a, 4b, 4c),

   wherein at least one of the three sensor elements remains unheated and is used to measure the temperature of the medium,

   - continuously determine the mass flow ($\Phi_M$) and/or the flow velocity ($v_D$) of the medium (3), and at the same time,
   - to evaluate - on the basis of a pair-based comparison of the temperatures (T1, T2, T3) and/or the heating powers (P1, P2, P3) of at least three sensor elements (4a, 4b, 4c) and/or of at least one variable derived from at least one of the temperatures (T1, T2, T3) and/or heating powers (P1, P2, P3)
   - a change in the thermal resistance of at least one of the at least three sensor elements (4a, 4b, 4c),
   - to evaluate - on the basis of a step response to a sudden change in the heating power supplied $\Delta P$ to at least one of the at least three sensor elements - a change in the internal thermal resistor of the at least one sensor element, and
   - to perform a correction of the measured value for the mass flow ($\Phi_M$) and/or the flow velocity ($v_D$) and/or to generate and output a message on the condition of the at least one sensor element in the event that a change of the internal and/or external thermal resistor occurs at at least one of the at least three sensor elements (4a, 4b, 4c).

2. Thermal flowmeter as claimed in Claim 1, wherein the electronics unit (9) is designed to determine the flow direction (3a) of the medium (3) that can flow.

3. Thermal flowmeter as claimed in at least one of the previous claims,

   wherein at least one of the at least three sensor elements (4a, 4b, 4c) has a first design (4a, 4b), with regard to the geometry, structure and material, and at least a second of the at least three sensor elements (4a, 4b, 4c) has a second design (4c) that is different to the first, and/or wherein at least two (4a, 4b) of the at least three sensor elements (4a, 4b, 4c) are arranged at two first equivalent positions in the pipe (2), in relation to the flow (3a) of the medium (3) surrounding the element locally, and wherein at least one (4c) of the at least three sensor elements (4a, 4b, 4c) is arranged at a second position in the pipe (2) that is different to the first position in relation to the flow (3b) of the medium (3) surrounding the element locally.

4. Thermal flowmeter as claimed in at least one of the previous claims,
   wherein at least one (4c) of the at least three sensor elements (4a, 4b, 4c) is arranged in relation to the longitudinal axis of the pipe, immediately upstream or downstream from a bluff body (16) or another module that influences the flow, in such a way that the flow profile locally surrounding the respective sensor element (4a, 4b, 4c) is specifically modified by the bluff body (16).

5. Thermal flowmeter as claimed in Claim 4, wherein the cross section of the bluff body (16) is a triangle, a rectangle, a parallelogram, a trapezoid, a circle or an ellipse.

6. Thermal flowmeter as claimed in at least one of the previous claims,
   comprising precisely three sensor elements (4a, 4b, 4c), wherein at least one of the three sensor elements (4c) is arranged in the immediate vicinity of a bluff body (16) or another module that affects the flow, in such a way that the local flow profile surrounding the respective sensor element (4a, 4b, 4c) is specifically modified by the bluff body (16), and wherein the first (4a, S1) and the second sensor element (4b, S2) are symmetrically arranged on opposite sides of an imaginary axis that is parallel to the pipe (2), wherein the third sensor element (4c, S3) is arranged on the imaginary axis, and wherein a bluff body (16) is arranged between the imaginary connecting line through the first (4a, S1) and the second sensor element (4b, S2) and the third sensor element (4c, S3), wherein the distance of the bluff body (16) to the third sensor element (4c, S3) is less than the distance to the imaginary connecting line.

7. Thermal flowmeter as claimed in at least one of the previous claims,
wherein the electronics unit (9) comprises a memory unit (9a), wherein at least one reference for a reaction of the sensor element (4, 7) to a sudden change in the supplied power ($\Delta P$) is saved on said memory unit (9a) in the functioning state.

8. Procedure designed to operate a thermal flowmeter (1) designed to determine and/or monitor the mass flow ($\Phi_M$) and/or the flow velocity ($v_D$) of a medium (3) that can flow through a pipe (2), with at least three sensor elements (S1, S2, S3) and an electronics unit (9) as claimed in at least one of the previous claims, in a normal operating mode (22) and a diagnostic mode (24),

wherein in the normal operating mode (22), at least one (S1) of the at least three sensor elements (S1, S2, S3) is heated with a controllable heating power (P1) and its temperature (T1) is measured, and the mass flow ($\Phi_M$) and/or the flow velocity ($v_D$) of the medium (3) is/are determined, and
wherein at least the following sequence of steps are executed in the diagnostic mode (24):

- a first sensor element (S1) is heated with a first heating power (P11) and its temperature (T11) is measured,
- a second sensor element (S2) is heated with a second heating power (P12) and its temperature (T12) is measured,
- the temperature of the medium ($T_M$) is measured using an unheated third sensor element (S3),
- the mass flow ($\Phi_M$) and/or the flow velocity ($v_D$) of the medium (3) is determined on the basis of the heating power (P11, P12) and/or the temperature (T11, T12) of the first (S1) or the second (S2) sensor element and/or at least a variable derived from at least one of said variables,
- on the basis of a pair-based comparison of the temperatures (T11, T12, ...) and/or the heating powers (P11, P12, ...) of the first (S1) and/or of the second (S2) sensor element and the temperature ($T_M$) of the third sensor element (S3) and/or on the basis of at least one variable derived from the temperatures (T11, T12, ...) and/or the heating powers (P11, P12, ...), an assessment is made regarding a change in the thermal resistance of at least one of the at least three sensor elements (S1, S2, S3),
- on the basis of a step response to a sudden change in the heating power $\Delta P$ supplied at at least one of the at least three sensor elements, an assessment is made regarding a change in the internal thermal resistance of the at least one sensor element, and
- the measured value for the mass flow ($\Phi_M$) and/or the flow velocity ($v_D$) is corrected and/or a message concerning the state (Di, $D_2$, $D_3$) of at least one of the at least three sensor elements (S1, S2, S3) is generated and output.

9. Procedure as claimed in Claim 8,
wherein the flow direction (3a) of the medium (3) is determined on the basis of a pair-based comparison of the temperatures (T11, T12, ...) and/or the heating powers (P11, P12, ...) and/or of at least a variable derived from the temperatures (T11, T12, ...) and/or the heating powers (P11, P12, ...).

10. Procedure as claimed in at least one of the Claims 8 or 9,
wherein, before at least two of the at least three sensor elements (S1, S2, S3) are simultaneously heated with a controllable heating power (P1, P2, P3), the measured temperatures ($T_M$) of the medium are compared (12) and, where necessary, a temperature correction term ($\Delta T_{kor,1,2}$, $\Delta T_{kor,1,3}$, $\Delta T_{kor,2,3}$) is calculated and applied to all subsequent measurements.

11. Procedure as claimed in at least one of the Claims 8 to 10,
wherein the power coefficients PC of the at least three sensor elements (S1, S2, S3) are compared.

12. Procedure as claimed in at least one of the Claims 8 to 11,
wherein the step response of a characteristic measured variable of the sensor element (4, 7) that depends on the heating power (P), particularly the temperature (T) or the electrical resistance (R), is evaluated.

13. Procedure as claimed in Claim 12,

wherein the step response of the temperature (T(t)) and/or the resistance (R(t)) of the at least one sensor element (4, 7) is recorded as a function of time (t), wherein, using a comparison of the recorded step response of the temperature (T(t)) and/or the resistance (R(t)) of the at least one sensor element (4, 7) with at least a reference step response for the temperature (T(t)) and/or the resistance (R(t)), a change in the thermal resistance of the at least one sensor element (4, 7) is deduced, and

in the event that a predefinable limit value for the change in the thermal resistance is exceeded, a message regarding a malfunction of the at least one sensor element (4, 7) is generated and output.

**14.** Procedure as claimed in Claim 12 or 13,

wherein the gradient of the temperature (T) and/or the resistance (R) is determined, and wherein, by comparing the gradient of the step response of the temperature (T) and/or of the resistance (R) and/or of a variable of the at least one sensor element (4, 7) derived therefrom with the gradient of at least a reference step response of the temperature (T) and/or the resistance (R), a change in the thermal resistance of the at least one sensor element (4, 7) is deduced and,

wherein, in the event that a predefinable limit value is exceeded for the change in the thermal resistance, a message regarding a malfunction of the at least one sensor element (4, 7) is generated and output.

**15.** Procedure as claimed in at least one of the Claims 8 to 14,

wherein a time interval (17) for recording the step response of the temperature (T) and/or the resistance (R) is selected in such a way that it is smaller than the time that the heat supplied as a result of the sudden change in the heating power ($\Delta P$) requires to go from the inside of the sensor element (4, 7) to the surface of the sensor element.

**Revendications**

**1.** Débitmètre thermique (1) destiné à la détermination et/ou à la surveillance du débit massique ($\Phi_M$) et/ou de la vitesse d'écoulement ($v_D$) d'un produit (3) apte à s'écouler à travers une conduite (2)

avec au moins trois éléments capteurs (4a, 4b, 4c) et une unité électronique (9), chacun des au moins trois éléments capteurs (4a, 4b, 4c)

- étant au moins partiellement et/ou temporairement en contact thermique avec le produit (3) et
- comprenant un capteur de température chauffé (5a, 5b, 5c), et

l'unité électronique (9) étant conçue pour

- chauffer chacun des trois éléments capteurs (4a, 4b, 4c) avec une puissance de chauffage (P1, P2, P3)
- mesurer leur température (T1, T2, T3),
- chauffer simultanément au moins deux des au moins trois éléments capteurs (4a, 4b, 4c), au moins l'un des trois éléments capteurs restant non chauffé et étant utilisé pour mesurer la température du produit,
- déterminer en continu le débit massique ($\Phi_M$) et/ou la vitesse d'écoulement ($v_D$) du produit (3), et en même temps,
- à partir d'une comparaison par paire des températures (T1, T2, T3) et/ou des puissances de chauffage (P1, P2, P3) des au moins trois éléments capteurs (4a, 4b, 4c) et/ou d'au moins une variable dérivée d'au moins une des températures (T1, T2, T3) et/ou des puissances de chauffage (P1, P2, P3), pour évaluer une variation de la résistance thermique d'au moins l'un des au moins trois éléments capteurs (4a, 4b, 4c),
- évaluer une variation de la résistance thermique interne de l'au moins un élément capteur à partir d'une réponse indicielle à une variation brusque de la puissance de chauffage fournie $\Delta P$ à l'un au moins des au moins trois éléments capteurs, et
- dans le cas où une variation de la résistance thermique interne et/ou externe se produit sur au moins l'un des au moins trois éléments capteurs (4a, 4b, 4c), pour effectuer une correction de la valeur mesurée pour le débit massique ($\Phi_M$) et/ou de la vitesse d'écoulement ($v_D$) et/ou pour générer et émettre un message sur l'état de l'au moins un élément capteur.

**2.** Débitmètre thermique selon la revendication 1, pour lequel l'unité électronique (9) est conçue pour déterminer le sens d'écoulement (3a) du produit (3) apte à s'écouler.

**3.** Débitmètre thermique selon au moins l'une des revendications précédentes,

pour lequel au moins l'un des au moins trois éléments capteurs (4a, 4b, 4c) présente une première conception (4a, 4b), en termes de géométrie, de structure et de matériau, et au moins un deuxième des au moins trois éléments capteurs (4a, 4b, 4c) présente une deuxième conception (4c) différente de la première, et/ou au moins deux (4a, 4b) des au moins trois éléments capteurs (4a, 4b, 4c) étant disposés dans deux premières positions équivalentes à l'intérieur de la conduite (2), respectivement par rapport à l'écoulement (3a) du produit (3) qui l'entoure localement, et au moins un (4c) des au moins trois éléments capteurs (4a, 4b, 4c) étant disposé dans une deuxième position à l'intérieur de la conduite (2), qui est différente de la première position par rapport à l'écoulement (3b) du produit (3) qui l'entoure localement.

4. Débitmètre thermique selon au moins l'une des revendications précédentes,
pour lequel au moins l'un (4c) des au moins trois éléments capteurs (4a, 4b, 4c) est disposé par rapport à l'axe longitudinal de la conduite, à proximité immédiate, devant ou derrière un corps de retenue (16) ou un autre module influençant l'écoulement, de telle sorte que le profil d'écoulement local entourant l'élément capteur respectif (4a, 4b, 4c) est modifié de manière ciblée par le corps de retenue (16).

5. Débitmètre thermique selon la revendication 4,
pour lequel la section transversale du corps de retenue (16) est un triangle, un rectangle, un parallélogramme, un trapèze, un cercle ou une ellipse.

6. Débitmètre thermique selon au moins l'une des revendications précédentes,
comprenant précisément trois éléments capteurs (4a, 4b, 4c), au moins l'un des trois éléments capteurs (4c) étant disposé à proximité immédiate d'un corps de retenue (16) ou d'un autre module influençant l'écoulement, de telle sorte que le profil d'écoulement local entourant l'élément capteur respectif (4a, 4b, 4c) soit modifié de manière ciblée par le corps de retenue (16), et le premier (4a, S1) et le deuxième élément capteur (4b, S2) étant disposés symétriquement sur des côtés opposés d'un axe imaginaire parallèle à la conduite (2), le troisième élément capteur (4c, S3) étant disposé sur l'axe imaginaire, et un corps de retenue (16) étant disposé entre la ligne de liaison imaginaire passant par le premier (4a, S1) et le deuxième élément capteur (4b, S2) et le troisième élément capteur (4c, S3), la distance du corps de retenue (16) par rapport au troisième élément capteur (4c, S3) étant inférieure à celle de la ligne de liaison imaginaire.

7. Débitmètre thermique selon au moins l'une des revendications précédentes,
pour lequel l'unité électronique (9) comprend une unité de mémoire (9a), sur laquelle unité de mémoire (9a) est mémorisée au moins une référence pour une réaction de l'élément capteur (4, 7) à un changement brusque de la puissance fournie (ΔP) dans l'état fonctionnel.

8. Procédé destiné à l'exploitation d'un débitmètre thermique (1) destiné à la détermination et/ou à la surveillance du débit massique ($\Phi_M$) et/ou de la vitesse d'écoulement ($v_D$) d'un produit (3) apte à s'écouler à travers une conduite (2), avec au moins trois éléments capteurs (S1, S2, S3) et une unité électronique (9) selon au moins l'une des revendications précédentes, dans un mode de fonctionnement normal (22) et dans un mode de diagnostic (24),

procédé pour lequel, dans le mode de fonctionnement normal (22), au moins un (S1) des au moins trois éléments capteurs (S1, S2, S3) est chauffé avec une puissance de chauffage réglable (P1) et sa température (T1) est mesurée, et le débit massique ($\Phi_M$) et/ou la vitesse d'écoulement ($v_D$) du produit (3) est/sont déterminé(s), et

procédé pour lequel, dans le mode de diagnostic (24), au moins les étapes de séquence suivantes sont exécutées :

- un premier élément capteur (S1) est chauffé avec une première puissance de chauffage (P11) et sa température (T11) est mesurée,
- un deuxième élément capteur (S2) est chauffé avec une deuxième puissance de chauffage (P12) et sa température (T12) est mesurée,
- la température du produit ($T_M$) est mesurée au moyen d'un troisième élément capteur (S3) non chauffé,
- à partir de la puissance de chauffage (P11, P12) et/ou de la température (T11, T12) du premier (S1) ou du deuxième (S2) élément capteur et/ou d'au moins une grandeur dérivée d'au moins l'une de ces grandeurs, on détermine le débit massique ($\Phi_M$) et/ou la vitesse d'écoulement ($v_D$) du produit (3),
- à partir d'une comparaison par paire des températures (T11, T12, ...) et/ou des puissances de chauffage (P11, P12, ...) du premier (S1) ou du deuxième (S2) élément capteur (S3) et/ou à partir d'au moins une grandeur dérivée des températures (T11, T12,...) et/ou des puissances de chauffage (P11, P12, ...), une évaluation est faite concernant une variation de la résistance thermique d'au moins l'un des au moins trois éléments capteurs (S1, S2, S3),
- à partir d'une réponse indicielle à une variation indicielle de la puissance de chauffage fournie ΔP au niveau d'au moins l'un des au moins trois éléments capteurs, une évaluation est faite concernant une variation de la résistance thermique interne de l'au moins un élément capteur, et
- une correction de la valeur mesurée pour le débit massique ($\Phi_M$) et/ou la vitesse d'écoulement (v$_D$) est effectuée et/ou un message concernant l'état d'au moins l'un des au moins trois éléments capteurs (S1, S2, S3) est généré et émis.

9.  Procédé selon la revendication 8,
    pour lequel le sens d'écoulement (3a) du produit (3) est déterminé à partir d'une comparaison par paire des températures (T11, T12, ...) et/ou des puissances de chauffage (P11, P12, ...) et/ou d'au moins une variable dérivée des températures (T11, T12, ...) et/ou des puissances de chauffage (P11, P12, ...).

10. Procédé selon au moins l'une des revendications 8 ou 9,
    pour lequel, avant le chauffage simultané d'au moins deux des au moins trois éléments capteurs (S1, S2, S3) avec une puissance de chauffage réglable (P1, P2, P3), un ajustement (12) des températures mesurées (T$_M$) du produit est effectué et, le cas échéant, un terme de correction de température ($\Delta T_{kor,1,2}$, $\Delta T_{kor,1,3}$, $\Delta T_{kor,2,3}$) est calculé et appliqué à toutes les mesures suivantes.

11. Procédé selon au moins l'une des revendications 8 à 10,
    pour lequel une comparaison des coefficients de puissance PC des au moins trois éléments capteurs (S1, S2, S3) est effectuée.

12. Procédé selon au moins l'une des revendications 8 à 11,
    pour lequel on évalue la réponse indicielle d'une grandeur de mesure caractéristique de l'élément capteur (4, 7), notamment la température (T) ou la résistance électrique (R), qui dépend de la puissance de chauffage (P).

13. Procédé selon la revendication 12,

    pour lequel la réponse indicielle de la température (T(t)) et/ou de la résistance (R(t)) de l'au moins un élément capteur (4, 7) est enregistrée en fonction du temps (t),
    pour lequel, au moyen d'une comparaison de la réponse indicielle enregistrée de la température (T(t)) et/ou de la résistance (R(t)) de l'au moins un élément capteur (4, 7) avec au moins une réponse indicielle de référence de la température (T(t)) et/ou de la résistance (R(t)), une variation de la résistance thermique de l'au moins un élément capteur (4, 7) en est déduite, et en cas de dépassement d'une valeur limite prédéfinissable pour la variation de la résistance thermique, un message concernant un dysfonctionnement de l'au moins un élément capteur (4, 7) est généré et émis.

14. Procédé selon la revendication 12 ou 13,

    pour lequel le gradient de la température (T) et/ou de la résistance (R) est déterminé, et pour lequel, au moyen d'une comparaison du gradient de la réponse indicielle de la température (T) et/ou de la résistance (R) et/ou d'une variable dérivée de celle-ci de l'au moins un élément capteur (4, 7) avec le gradient d'au moins une réponse indicielle de référence de la température (T) et/ou de la résistance (R), on en déduit une variation de la résistance thermique de l'au moins un élément capteur (4, 7) et, en cas de dépassement d'une valeur limite prédéfinissable pour la variation de la résistance thermique, un message concernant un dysfonctionnement de l'au moins un élément capteur (4, 7) est généré et émis.

15. Procédé selon au moins l'une des revendications 8 à 14,
    pour lequel un intervalle de temps (17) pour l'enregistrement de la réponse indicielle de la température (T) et/ou de la résistance (R) est choisi de manière à être inférieur au temps nécessaire pour que la chaleur fournie au moyen de la variation indicielle de la puissance de chauffage ($\Delta$P) atteigne la surface de l'élément capteur (4, 7) depuis l'intérieur de celui-ci.

Fig. 1

Fig. 2a)

Fig. 2b)

Fig. 3

Fig. 4

Fig. 5

Fig. 6a

Fig. 6b

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010040285 A1
- DE 102009045956 A1
- DE 102009045958 A1
- DE 102007023840 B4
- DE 102005057687 A1
- DE 102007023823 A1
- US 8590360 B2
- WO 2008142075 A1